# EUROPEAN PATENT SPECIFICATION

(11) **EP 0 644 500 B1**
(45) Date of publication and mention of the grant of the patent: **12.12.2001**
(21) Application number: 94306846.0
(22) Date of filing: 19.09.1994
(51) Int. Cl.: G06F 17/60, G06F 3/023

(54) **Method and system for producing a table image having focus and context areas showing direct and indirect data representations**
Verfahren und System zur Herstellung von Tabellenabbildungen mit Fokus- und Kontextzonen, die direkte und indirekte Datenrepresentationen darstellen
Méthode et système pour réaliser une image d'une table avec champ principal et secondaire qui présentent des données directes et indirectes

(30) Priority: 17.09.1993 US 123174; 17.09.1993 US 123496
(43) Date of publication of application: 22.03.1995
(73) Proprietor: Inxight Software, Inc., Santa Clara, CA 95054 (US)
(72) Inventor: Rao, Ramana B., San Francisco, CA 94112 (US); Card, Stuart K., Los Alto Hills, CA 94022 (US)
(74) Representative: Grünecker, Kinkeldey, Stockmair & Schwanhäusser Anwaltssozietät

(56) References cited:
- EP-A- 0 447 095
- EP-A- 0 619 549
- WO-A-91/04541
- GB-A- 2 139 846
- US-A- 5 226 118
- PROCEEDINGS OF THE 1992 CONFERENCE ON HUMAN FACTORS IN COMPUTER SYSTEMS, May 1992, MONTEREY, CALIFORNIA, US, pages 83-91, XP002006588 SARKAR ET AL: "Graphical Fisheye Views of Graphs"

## Description

This invention pertains to a method and a system according to the preamble parts of claims 1 and 7.

Such a method and system are described in US-A-5,226,118 which will be discussed below.

A key objective of information systems designers is the presentation of information representing data stored in the memory device of a processor-controlled system to the human user of the system in an effective image format that conveys and enhances the understanding of the information in a spacially efficient and effective manner, and permits the system user to quickly and efficiently specify and locate information of particular interest.

A familiar and effective information presentation form for certain types of structured information is that of an image of a table, also referred to herein as a "table image". As used herein, a "table" is an orderly, rectilinear arrangement of information, typically but not necessarily, ordered in a rectangular form of rows and columns and having identifiers, such as labels, arranged at the periphery of the table. The intersection of a row and column in a table defines a data location, typically called a "cell", and may include alphabetic and numeric character data or arithmetic operators or formulas. A table is distinguishable from various types of graphs which do not have all of the characteristics of the orderly, rectilinear arrangement of information found in a table. A popular application of a table image is the "spreadsheet", the information presentation format used by a computer-implemented spreadsheet application program that presents a tabular image of underlying data stored in the memory of a system, and that provides a system user with access to the stored data via the manipulation of the character display features that visually represent the underlying data presented in the cells of the spreadsheet. Table images also may be used in a wide variety of application program contexts where the information structure includes linear elements and is organized in, or is capable of being organized in; an n-dimensional "array data structure".

Baker et al. in US-A-5,226,118 discloses a data analysis computer system capable of storing measurement data from plural measured processes and definitions for many data analysis charts. There is further disclosed a data display gallery feature which divides the computer system's display into a two dimensional array of cells, called a graphical spreadsheet or gallery, having cell definitions assigned to at least a subset of the cells. Each cell definition consists of either a set of measurement data which can be displayed as a unit, or a mathematical combination of a plurality of specified sets of measurement data. Typically each displayed cell contains a data map depicting a set of data in accordance with a corresponding cell definition.

It is the object of this invention to provide a method and a system for enabling a user to perform data analysis in a natural manner.

This object is achieved by the method of claim 1 and the system of claim 7.

Preferred embodiments are the subject matters of the dependent claims.

Several advantages are immediately apparent from the method and system of the present invention. The present invention requires very little specialized skill by the system user beyond the skills already acquired in using an application program that presents and allows manipulation of table images. Moreover, the technique takes advantage of human cognition and perception capabilities by providing character data in a graphical form to permit inspection of the data for patterns and trends in a global context. The technique can be easily integrated into conventional spreadsheet and other table-oriented application programs.

The invention, will best be understood from the following description of the illustrated embodiment when read in connection with the accompanying drawings. In the Figures, the same numbers have been used to denote the same component parts or acts.
FIG. 1 illustrates an exemplary table image 10 produced by the method of the present invention showing a graphical display object in each of the cell regions;
FIG. 2 schematically illustrates the components and general organizational structure in memory of the data used by the method of the present invention;
FIG. 3 schematically illustrates a variation of the nD data array shown in FIG. 2 for a more complex data organization;
FIG. 4 is a flow chart illustrating the steps of producing a table image having a graphical representation of the underlying data in the cell regions according to the method of the present invention;
FIG. 5 is a flow chart illustrating the steps of producing table image 10 of FIG. 1 according to the method of the present invention;
FIG. 6 is a flow chart illustrating a variation of the method shown in FIG. 5 as applied in the context of a conventional spreadsheet application;
FIG. 7 schematically illustrates an exemplary table image 80 produced by a preferred embodyment showing differently-sized cell regions for focal and for context regions of the table image, produced according to another aspect of the method of a preferred embodyment;
FIG. 8 illustrates the mapping of a degree of interest function from a natural cell region size to a focal region according to the method of a preferred embodyment;
FIG. 9 graphically illustrates a three level degree of interest function;
FIG. 10 illustrates the affect on a single level degree of interest function from the manipulation of the focal region in the table image in three ways;
FIG. 11 is a flow chart illustrating the steps of producing a table image including a focal region ;
FIG. 12 is a flow chart illustrating the steps of producing a table image including a focal region and having a graphical representation of the underlying data in the cell regions according to the combined methods illustrated in FIGS. 4 and 11;
FIG. 13 is a graph illustrating the advance in the number of cell regions able to be represented in a single table image according to the methods illustrated in any of FIGS. 4, 5, or 6;
FIG. 14 is display screen showing a table image produced by the method illustrated in FIG. 12;
FIG. 15 is display screen showing a second table image produced by the method illustrated in FIG. 12;
FIG. 16 is a flow chart illustrating the steps of various user-controlled processing features of a user interface;
FIG. 17 illustrates a dialogue box for changing cell presentation type parameters, as provided by the user interface of the illustrated embodiment;
FIG. 18 illustrates a dialogue box for requesting the highlighting of certain source data values in the table image, as provided by the user interface of the illustrated embodiment;
FIG. 19 is a simplified block diagram illustrating the system environment; and
FIG. 20 is a simplified block diagram illustrating a system for operating, and software product.

The present invention also relates to a system for performing operations. This system may be specially constructed for the required purposes or it may comprise a general purpose computer selectively activated or reconfigured by a computer program stored in the computer. In particular, various general purpose machines may be used with programs in accordance with the teachings herein, or it may prove more convenient to construct more specialized apparatus to perform the required acts of the method. The required structure for a variety of these machines will appear from the description given below.

Preliminary to describing an embodiment of the claimed invention, certain terms are defined below: they have the meanings indicated throughout this specification and in the claims, unless indicated otherwise.

The term "data" refers herein to physical signals that indicate or include information. The term "data" includes data existing in any physical form, and includes data that are transitory or are being stored or transmitted.

An "item of data" or a "data item" is a quantity of data that a processor can access or otherwise operate on as a unit. An "array of data" or "data array" or "array" is a combination of data items that can be mapped into an array.

A "processor-controlled machine", "processor-controlled system" or "processor" is any machine, component or system that can process data, and may include one or more central processing units or other processing components.

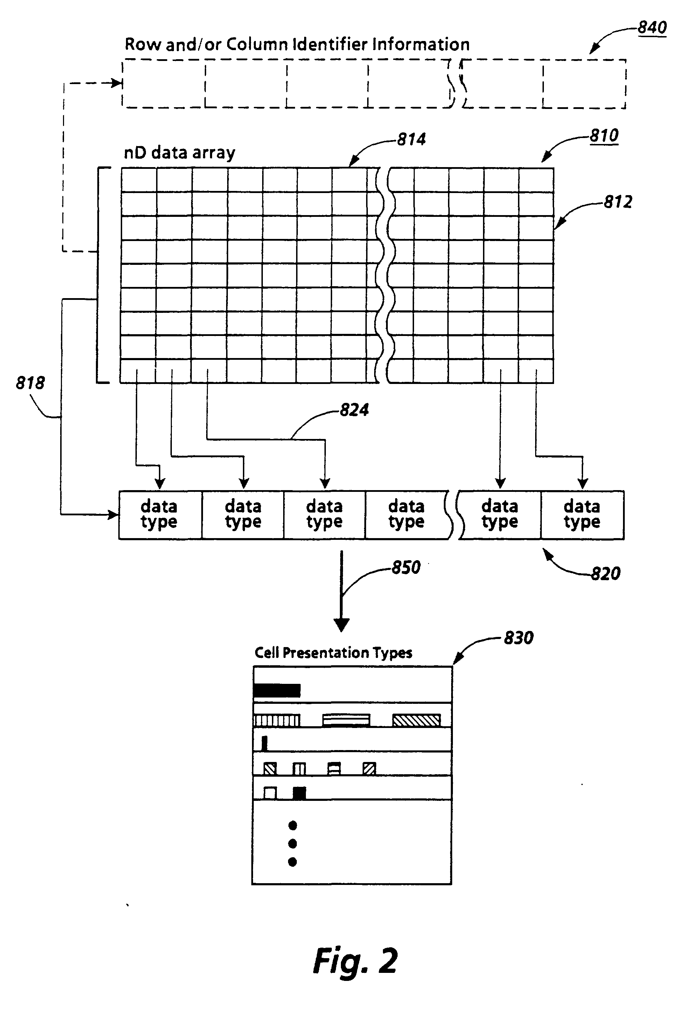

An item of data "indicates" a thing, an event, or a characteristic when the item has a value that depends on the existence or occurrence of the thing, event, or characteristic or on a measure of the thing, event, or characteristic. When an item of data can indicate one of a number of possible alternatives, the item of data has one of a number of "values". In addition, a first item of data "indicates" a second item of data when the second item of data can be obtained from the first item of data, when the second item of data can be accessible using the first item of data, when the second item of data can be obtained by decoding the first item of data, or when the first item of data can be an identifier of the second item of data. For example, when the data type value of a data type data item can be obtained from a source data item, such as when the source data item has a pointer to the data type data item or otherwise has information related to the location of a second item of data in the memory, then the source data item indicates the data type data item. In the figures herein, such a relationships between the data in memory is illustrated by an arrow from the first item of data to the second item of data, as shown, for example by arrow 818 in FIG. 2.

An "image" is a pattern of light. An image may include characters, words, and text as well as other features such as graphics. An "image output device" is a device that can provide output defining an image. A "display" or "display device" is an image output device that provides information in a visible, human viewable form. A display may, for example, include a cathode ray tube; an array of light emitting, reflecting, or absorbing elements; a device or structure that presents marks on paper or another medium; or any other device or structure capable of defining an image in a visible form. To "present an image" on a display is to operate the display so that a viewer can perceive the image. A "display area" is the portion of the display in which an image is presented or the medium which receives an image. The display area may include one or more "workspaces" wherein display features appear to have respective relative positions, and "presenting" a workspace in the display area that includes plural display features produces the human perceptions of the display features in respective positions relative to each other. A window is an example of a workspace.

Data "defines" an image when the data includes sufficient information to directly produce the image, such as by presenting the image on a display. Data defining an image will also be referred to herein as an "image definition" or "image definition data". For example, a two-dimensional array is an image definition that can define all or any part of an image, with each item of data in the array providing a value indicating the color of a respective location of the image. Each such image location is typically called a "pixel", and the two-dimensional array of data is typically called "image pixel data" or an "image pixel data structure". While image pixel data is the most common type of image definition data, other image definitions, such as vector list data, are intended to be included within the meaning of data defining an image.

The term "display feature" refers to any human perception produced by a display in a processor-controlled machine or system. A "display object" or "object" is a display feature that is perceptible as a coherent unity. A display object having a bounded area may be called a "region". An image "includes" a display feature or object if presentation of the image can produce perception of the feature or object. Similarly, a display object "includes" a display feature if presentation of the display object can produce perception of the display feature.

A display feature or display object is not limited to a strictly pictorial representation. An image may include "character display features". When presented in image form in the display area of a display device, "characters" may be referred to as "character display features". "Character" as used herein means a discrete element that appears in a written or printed form of a particular language, and is a symbolic representation of information directly perceivable by a human who understands the particular language.

The "table image" produced by the method of the present invention includes a plurality of row identifier regions, a plurality of column identifier regions, and a plurality of cell regions. The cell regions are arranged in the table image in row and column order such that the width of the cell region in any one column is the same as the width of the column's respective column identifier region; the height of the cell region in any one row is the same as the height of the row's respective row identifier region; the range of x locations of a cell region in the display area is the same as the range of x locations of the cell region's respective column identifier region; and the range of y locations of a cell region in the display area is the same as the range of y locations of the cell region's respective row identifier region in the display area.

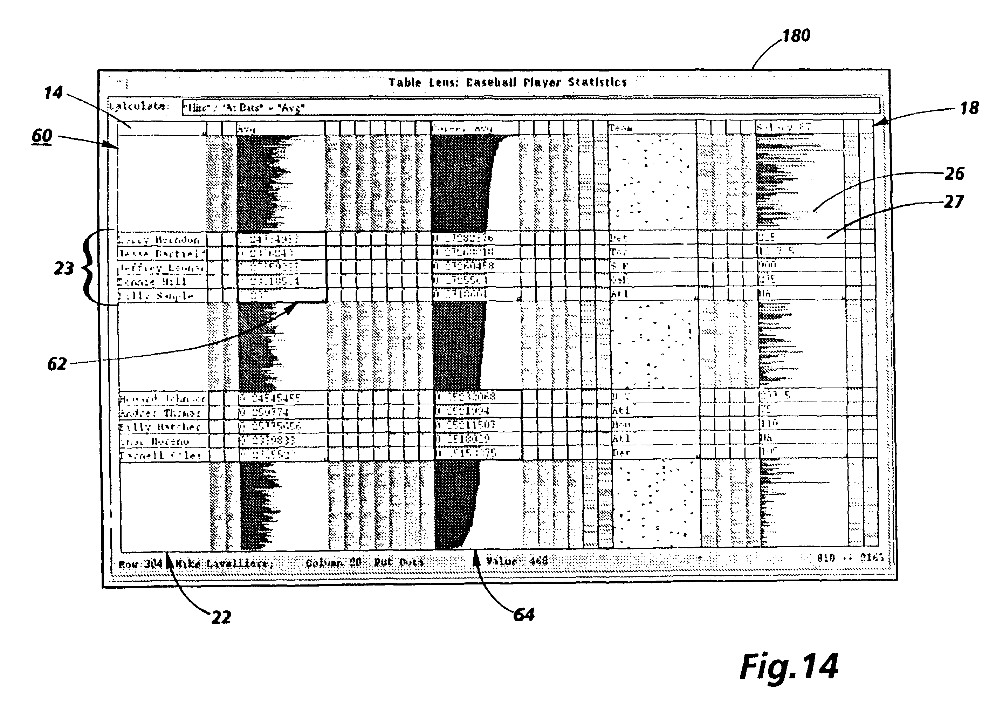

A display feature "represents" a body of data when the display feature can be mapped to one or more items of data in the body of data, or, stated in another way, a display feature "represents" the item or items of data to which it can be mapped. For example, in a table image, the character display features that are presented in the image as an entry in a cell region typically "directly represent", and can be mapped to, an item of data in a data structure such as a data array. The character display features in an image "directly represent" an item of data when each character display feature is a one-to-one mapping of an item of data, or a portion of an item of data, having a character data value to which it can be mapped; the character display features are a direct representation of the character data values. Thus, for example, a conventional application program typically produces a table image including character display features in the cell regions that directly represent the alphanumeric information included in the underlying data structure, as shown in FIG. 14. Cell region 26 shows character display features which are direct mappings from data items in the data array.

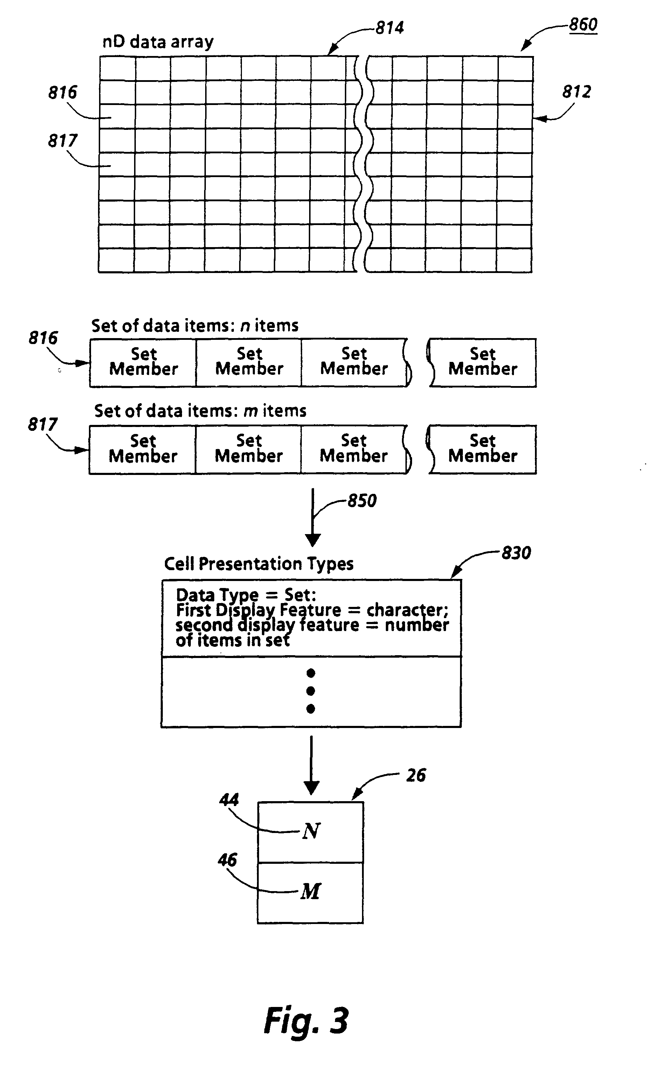

The method of the present invention produces a "graphical" display object for display in the table image. As used herein, a graphical display object is an "indirect" representation of the information included in the underlying data structure. Generally, but not necessarily, a graphical display object will include display features other than character display features when the underlying data from which the graphical display object is mapped is character information. Examples of graphical display objects include, but are not limited to, circular, rectangular, and triangular shapes with or without interior fill color, lines of various thicknesses, combinations of shapes and lines, features perceivable as images of physical objects, and the like. Thus, a graphical display object is more of a pictorial representation of information than the directly symbolic representation of information that is conveyed by characters. However, as discussed in more detail below, there are instances when the underlying data is effectively indirectly represented by a graphical display object that includes character display features. For example, when a data item is a composite object or a bit map or other complex data structure, a single character display feature may indirectly represent the complex data structure in the cell region of the table image. When used in this sense, character display features are used as graphical elements in an essentially graphical image. Table 3 below and FIG. 3 provide examples of the use of character display features as indirect graphical representations of data items.

The mapping of one or more items of data to a display feature or object is performed by an "operation" which is used herein to mean a set of instructions (instruction data items) accessible and executable by the processor in a system, defining the mapping relationship or function between one or more items of data (an input of the operation) and a display feature or object in an image (an output of the operation). An operation "produces" a display feature or object in an image when the operation begins without the data defining the display feature or object in the image and performing the operation results in the data defining the display feature or object in the image. When the operation uses items of data as input to produce data defining a display feature or object in an image, the display feature or object is "produced from" those input data items.

One way of categorizing an operation is to distinguish it by the type of data the operation uses as input. The method of the present invention is a "model-based operation". A model-based operation uses "model data" as input and may produce image definition data defining an image as output. A data item other than image definition data, for example, a data item other than an image pixel data item, is an "information model data item" or "information data". A combination of interrelated information data items is referred to herein as an "information model data structure", or a "information data structure". A model-based operation maps one or more information data items in an information data structure to a display feature included in the image produced by the operation. An information data structure is not limited to a combination of data items physically located in a substantially contiguous part of a system's memory, but may include individual model data items diversely located in memory and accessible by the processor when it performs the operation. A model-based operation is distinguishable from an image-based operation that maps one or more image definition data items, such as pixels, to a display feature included in the image produced by the operation.

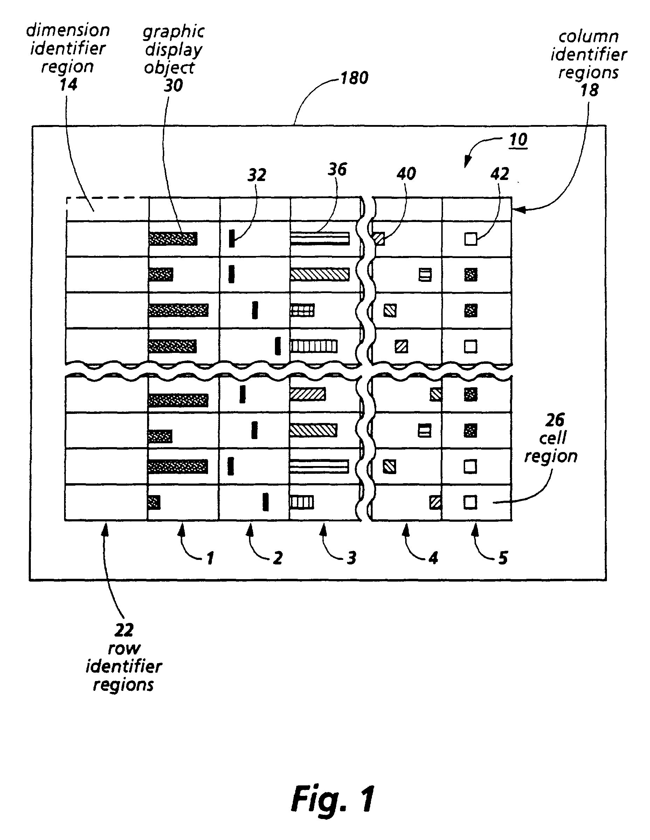

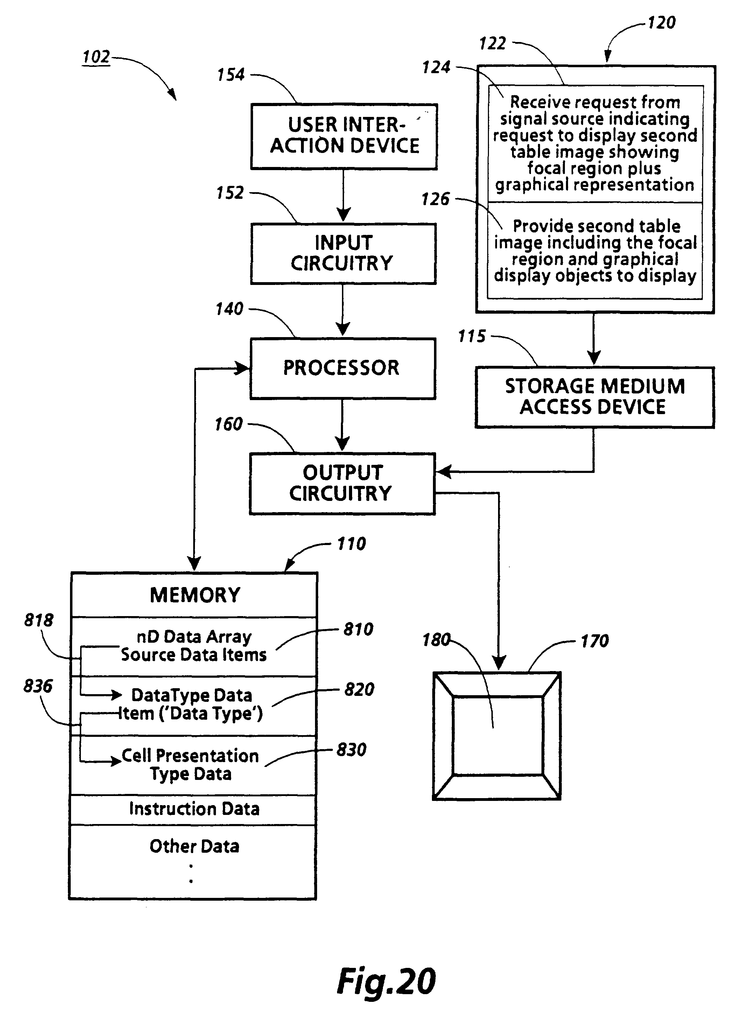

FIG. 1 illustrates an example of a table image 10 produced by the method of the present invention. Table image 10 is displayed in display area 180 of display device 170 (FIG. 20), and includes a number of column identifier regions 18, row identifier regions 22, an optional dimension identifier region 14, shown in dotted lines, and a number of cell regions 26. The wavy lines and breaks in the table indicate that the size of table image 10 is not a fixed size, but is determined by several factors discussed in more detail below. Each of the row and column identifier regions 18 and 22 may contain character label information respectively identifying the contents of the information in the row and columns. Dimension identifier region 14 may contain character label information identifying a common characteristic or property about the information contained in the rows or in the columns, or the table generally.

Each cell in the table image is paired with a respective source data item stored in the memory of the system, and, in a conventional table image, the information in a respectively paired data item is presented in the respectively paired cell. Such information typically includes numeric data such as quantities and dates, text data, and various types of alphanumeric encoded data which, when decoded, indicates one of two or more categories of information. Typically, the data appearing in the group of cells in a single row represents related elements of information governed by some relation or concerning a common subject (sometimes called the "invariant" or the "case") identified in the row identifier region, and the data appearing in the group of cells in a single column are instances of the same type of information common to all subjects (sometimes called the "component" or the "variable") and identified in the column identifier region. The use of rows and columns in this manner may of course be reversed depending on the organization of the underlying data.

Each of the cell regions in table image 10 produced by the method of the present invention contains, in place of the character information typically presented in a conventional table image, a graphical display object, illustrated examples of which include, but are not limited to, black-filled bar 30, small rectangular black-filled object 32, color-filled bar 36, color-filled square 40, and black- or white-filled square 42. At least one of the display features of each graphical display object appearing in a cell represents a "cell presentation type" that has been determined by a data type associated with, or indicated by, the character, or nongraphical, data of the respectively paired source data item. Generally, although not necessarily, all of the source data items in a single column have the same data type, and thus all of the graphical display objects in the column will be of the same presentation type. In addition, another display feature of each graphical display object appearing in a cell may graphically represent the source data value of the respectively paired source data item, so that a single graphical display object will represent both the data type and data value of the underlying respectively paired source data item.

With continued reference to FIG. 1, the presentation types shown by the graphical display object examples illustrated therein are summarized in Table 1 below:

**TABLE 1**

| Figure 1 Columns 1-5: Cell Presentation Types | | |
|---|---|---|
| Col. | Data Type/Value | Presentation Type |
| 1 | Quantity Data; numeric quantity value | black-filled bar; bar length in cell determined by quantity data value; |
| 2 | Category Data; alphanumeric category value | black-filled rectangular object; size of object determined by number of categories; cell position of object determined by category data value; |
| 3 | Quantity and Category Data | color-filled bar; bar length in cell determined by quantity data value; fill color determined by category value and number of categories; |
| 4 | Category Data | color-filled square object (color swatch); fill color and cell position determined by category data value; object size determined by number of categories; |
| 5 | Category Data (Boolean) | black- or white-filled square object; fill color determined by category data value |

The exemplary presentation types listed in Table 1 are not intended in any way to be limiting. Numerous variations of these presentation types and many other presentation types are possible. For example, the variable display features, or parameters, of a graphical display object produced from a cell presentation type include object length or width; object color variations, such as variations in hue, saturation, lightness or density; object position in the cell area; the area of the object; the slope of the object; and the angle of the object. In general, the design of a cell presentation type uses principles of graphic design to select the graphical features most suited for the particular data type and range of data values, and that take advantage of human cognitive skills for most effectively decoding graphical information. Table 2 below provides additional examples of cell presentation types for more complex data types and data values.

**TABLE 2**

| Other Cell Presentation Type Examples | |
|---|---|
| Data Type/Value | Cell Presentation types Examples |
| Date data (e.g., in form of mm/yy) (Category data) | For practical year range (e.g., 10 year period), color-filled square object (color swatch); fill color determined by year (category) data value; cell position determined by month (category) data value; |
| A set of data items, or objects; contains individual set members each having a quantity value; number of items in set is numeric quantity that can be determined; | 1. character display feature (numeral) represents data type and number of items in set; cell position of character display feature determined by whether a certain set member exists in each set (Boolean category value); 2. black- or white-filled square object; fill color determined by whether a certain set member exists in each set (Boolean category value); |
| Composite Document data type; contains data about author, title, date of publication, document type (e.g., spreadsheet, word processing, illustrtor, etc.) full text; multi-media components, etc. | Any one or more components of the composite document information may be graphically represented. For example: 1. color-filled bar; bar length in cell determined by length of title (computed quantity date value); fill color determined by author (category value); 2. black-filled bar; bar length in cell determined by length of document (computed quantity data value); OR numeric character display features, where number is computed length of document; 3. black-filled bar; bar length in cell determined by number of occurences of a keyword in document; 4. color-filled square object (color swatch); fill color and cell position determined by document type (category data value); object size in cell determined by total number of categories; |

Each graphical display object that is produced from a mapped cell presentation type has at least one distinguishing display feature representing the data type of the source data item.

FIG. 2 schematically illustrates the data structures used to produce table image 10 of FIG. 1 in the illustrated embodiment. The model data is organized in an *n*-dimensional ("nD") data array of at least two dimensions, shown by way of example in FIG. 2 as 2D data array 810. The data organized in individual instances of one dimension, such as in row 812, represents related information about an instance of the invariant. Data appearing in individual instances of a second dimension, such as in column 814, represents the same component type of information about each instance of invariant. Each individual data item in nD data array 810 will be referred to herein as a "source data item". In general, any model data having these characteristics and suitable for organizing in an n-dimensional (nD) data array may take advantage of the method of the present invention. In addition, any of a number of conventional array indexing programming techniques may be used by the system processor to access and obtain individual source data items in nD data array 810 for further processing, such as for display in a cell region 26 in table image 10. For purposes of display and presentation of the information in nD data array 810 in table image 10, each source data item is matched to a respective cell region 26 in table image 10 also using a conventional array indexing programming technique, and the source data item accessed and obtained via an indexing technique for a respective cell region 26 in table image 10 is referred to hereafter as a "respectively paired" source data item.

Data array 810 indicates, as shown via arrow 818, a data structure 820 of data type data items, each of which has a value that describes the data type of one or more source data items, such that each source data item indicates a respectively paired data type data item. The data type describes how to interpret the value of the data (called the "source data value") in the source data item. The source data values of the data in data array 810 will typically directly include character information or include one or more signals (e.g., bits) that are able to be decoded into character information. However, data array 810 may also include, as individual source data values, complex computer objects such as a simple or composite document object, a set, or a bit map. For example, data array 810 may define a collection of composite documents suitable for organizing in interrelated rows and columns, or a collection of bit maps representing pictures suitable for organizing in interrelated rows and columns.

Data type information will vary according to the particular data in nD data array 810, and examples of data types are included in Table 1 above (e.g., "quantity" and "category"). Category data is typically implemented as an encoding scheme where a character, numeric, or bit value in the source data item indicates one of several possible data values a data item may take on. Other data types may include descriptions, for example, of "text", "(calendar) date", and "composite object" source data items. Typically, since data organized in an instance of a second dimension of nD data array 810, for example, in one column, represents the same component type of information about each instance of an invariant, data type data structure 820 will contain one data type per data component, or column, as illustrated by arrow 824 and the similar unmarked arrows in FIG. 2. As will be seen from the discussion below, table images produced from data in the nD data array organized so as to have one data type per column according to the method of the present invention produce very effective graphical overviews of the underlying data. However, the method of the present invention may also be useful for, and is therefore intended to encompass, the use of an input nD data array where each component (column) of data does not have a single data type and where each individual source data item indicates its own data type.

With continued reference to FIG. 2, cell presentation type data structure 830 contains presentation type information for each defined presentation type sufficient to produce a graphical display object for display in a cell region 26 including the first and second display features determined respectively by the data type and source data value for a respectively paired source data item. In FIG. 2, pictorial elements of various graphical display objects representing presentation types and organized in a linear one-dimensional array are merely symbolic of cell presentation type data structure 830. In the illustrated embodiment, cell presentation type data structure 830 is actually a set of software routines,or pointers to software routines, entry to which is controlled by a one-to-one mapping of a data type to a presentation type routine, illustrated by arrow 300 in FIG. 2.

Finally, data accessed by the system may also include row and column identifier data structure 840. This data structure contains the optional heading or label information that appears in row identifier regions 22 and column identifier regions 18 of table image 10. In many applications that display conventional table images, such as spreadsheet and relational data base applications, label information is routinely provided because of its critical nature in conveying valuable information about the invariant and component data in the table. As will be explained in more detail below, in the illustrated embodiment, the ability to control the display and suppression of visible label information, especially in the environment of large table images, is a feature of the method of the present invention that further enhances the effective communication of the information in table image 10.

Table 2 presents examples of cell presentation types for source data items having more complex data structures, such as sets and composite data objects. FIG. 3 schematically illustrates the mapping from data array 860 of source data items 816 and 817 which are sets of data items, and have a data type of "set". Set 816 has *n* members, while set 817 has *m* members. Cell presentation type data structure 830 contains the cell presentation type for a" set" data type. Cell regions 26 in table image 10 show graphical display objects 44 and 46 as being character display features representing the number of members in each set. Thus, the entire complex source data item 816 of a set of member data items is indirectly and graphically represented in a cell region 26 of table image 10 as graphical display object 44.

A relational data base may supply the source data items from which table image 10 is constructed. Relational databases provide support for automatically maintaining multiple data relations and generating static snapshots of the data in table format. Typically, a relational data base has one or more base tables associated with it consisting of a row of column identifiers (headings or labels) together with rows of data values. Data type information is also generally available or may be easily derived. The method of the present invention provides a relational database application with tools for dynamically visualizing and manipulating the data presented.

Similarly, the data structure provided in a conventional spreadsheet program may supply the source data items from which table image 10 is constructed. Typically, a spreadsheet data structure includes row and column identifier information, data type information, and table image layout information as well as the source data values for the cell contents. Source data items in a typical spreadsheet may include equations, and a cell presentation type for such cells may either graphically represent the source data value computed from the equation, or the equation itself.

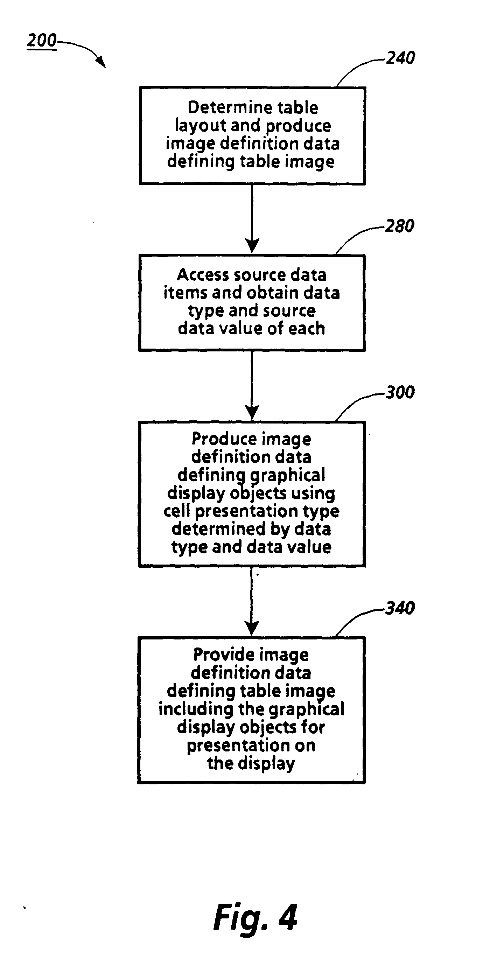

FIG. 4 illustrates the general steps of method 200 of the present invention for producing table image 10 of FIG. 1. In box 240, the overall table image layout is determined and image definition data defining the table border or outline, the grid lines for the row and column identifier regions and for the cell regions, and the contents (labels) of the row and column identifier regions is produced. For each cell region included in the table image, the source data items in nD data array 810 are accessed, in box 280, and the data type and source data value of each source data item is obtained. Then, in box 300, the image definition data defining the graphical display objects to be presented in the included cell regions are produced using the cell presentation type for the data type and data value of each respective source data item. The image definition data defining table image 10 and the graphical display objects is then presented, in box 340, in display area 180 of the system's display device.

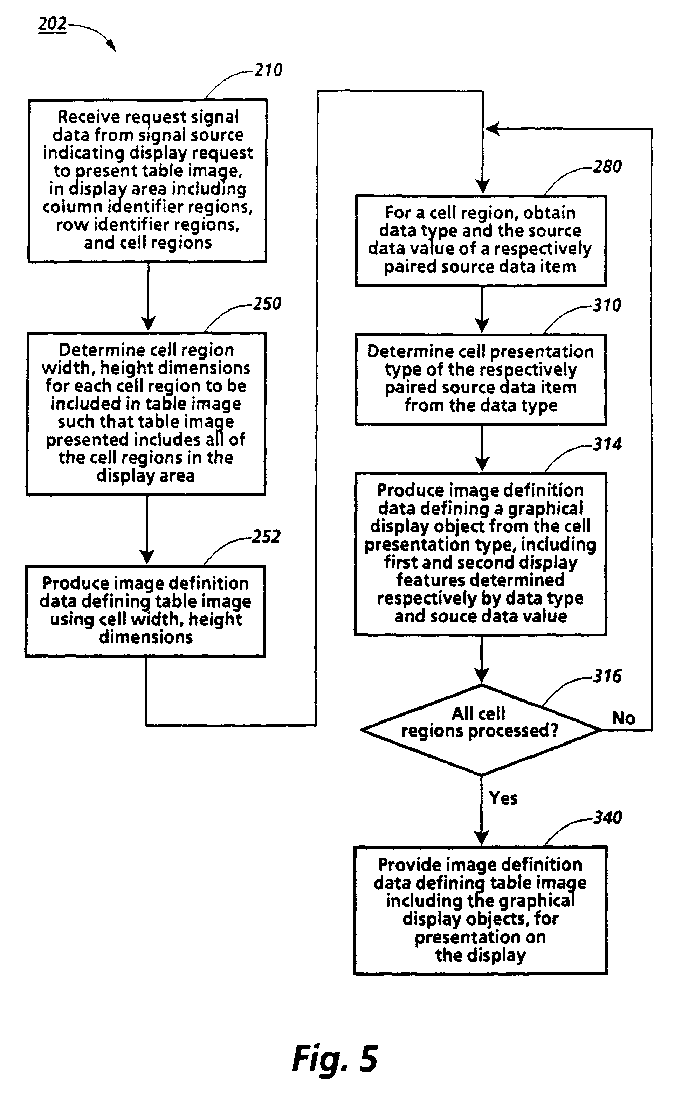

FIG. 5 is a flowchart illustrating an expanded set of steps, in method 202, for presenting table image 10 in such a manner that it presents a cell region and graphical representation for every source data item in nD data array 810 in a single image, in response to an input signal indicating an image display request to display table image 10. Method 200 of FIG. 4 may be effectively used to display a portion of an entire table with indirect, graphical representations for the data in the included cell regions. However, an even more powerful use for the method of the present invention is to take advantage of the display space compression offered by an indirect graphical representation of the source data items in nD data array 810 by computing the table layout of table image 10 so as to accommodate all of the cell regions necessary to display the complete table, as shown in box 250. Boxes 280, 310, 314 and 316 then show the processing loop for accessing all source data items for every cell to be displayed and for producing the image definition data defining the graphical display object to be presented in the each cell region using the cell presentation type for the data type and data value of each respectively paired source data item. When nD data array 810 is organized so that all of the source data items in each column 814 (FIG. 2) have the same data type, the efficiency and performance of the processing loop beginning with box 280 in FIG. 5 can be significantly improved by traversing nD data array 810 by row within column.

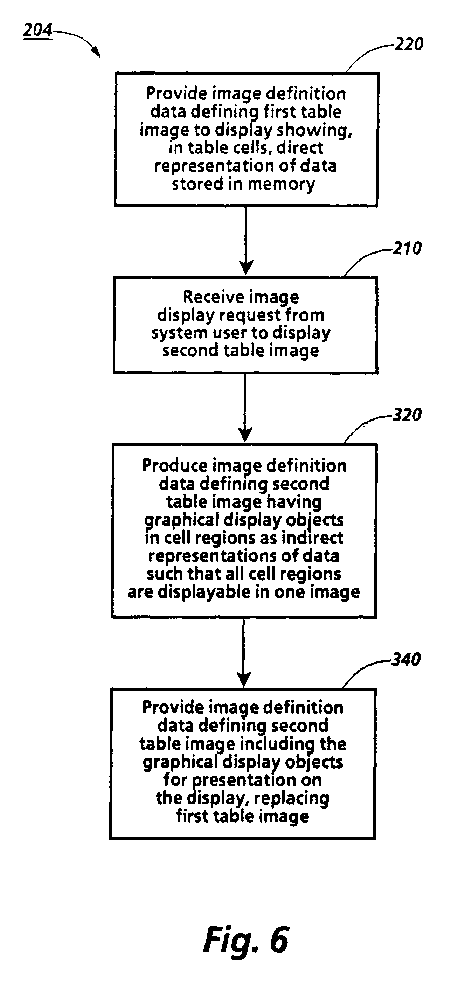

FIG. 6 illustrates still another aspect of the present invention that is useful when integrating the present method into an existing spreadsheet or relational data base application or the like where conventional table images, showing directly represented data, are displayed. In method 204, a conventional first table image is displayed in box 220. A system user uses an input device to produce signals indicating an image display request to display table image 10. In method 204, table image 10 includes cell regions for indirectly representing every source data item in the underlying nD data array 810 of the application. In response to the image display request by the system user, image definition data is produced, in box 320, defining a second table image having graphical display objects in the cell regions as indirect representations of the respectively paired source data items in the underlying data structure such that all cell regions are displayable in one image. Method 204 provides the system user of a conventional spreadsheet or relational data base program with the ability to compress an entire table that may require several table images to view by conventional scrolling or paging techniques into a single table image and to view the data in graphical form. The graphical view provides the ability to see patterns and trends in the data more easily and viewing the entire table in one image permits easier location of information of interest to the system user.

In this connection, the following references are cited.

George W. Furnas, in "Generalized Fisheye Views", *Proceedings of the ACM SIGCHI Conference on Human Factors in Computing Systems*, April 1986, ACM, pp. 16-23, discloses the application of "fisheye views" of information to the design of a computer interface for the display of large information structures, presenting a simple formalism for defining a fisheye view based on a "Degree of Interest" (hereafter also referred to as "DOI") function that allows fisheye views to be defined in any sort of information structure where the necessary components of the formalism can be defined. Furnas further discloses that the basic strategy for the display of a large structure uses the degree of Interest function to assign to each point in the information structure a number telling how interested the user is in seeing that point, given the current task. A display of any size, *n*, can then be made by simply showing the *n* "most interesting" points as described by the DOI function.

An extension of the fisheye view information presentation strategy to the domain of graphs is disclosed in Manojit Sarkar and Marc H. Brown, "Graphical Fisheye Views of Graphs", *Proceedings of the ACM SIGCHI Conference on Human Factors in Computing Systems*, April 1992, ACM, pp. 83-91. Sarkar and Brown introduce layout considerations into the fisheye formalism, so that the position, size, and level of detail of objects displayed are computed based on client-specified functions of an object's distance from the user's current point of interest, called the "focus", and the object's preassigned importance in the global structure.

J. D. Mackinlay, G. G. Robertson, and S. K. Card, in "The perspective wall: Detail and context smoothly integrated", *Proceedings of the ACM SIGCHI Conference on Human Factors in Computing Systems*, ACM, April 1991, pp. 173-179, disclose a technique called the "Perspective Wall" for efficiently visualizing linearly and temporally structured information with wide aspect ratios by smoothly integrating detailed and contextual views. Specialized hardware support for three dimensional (3D) interactive animation is used to fold wide two dimensional (2D) layouts into 3D visualizations that have a center panel for detail and two perspective panels for context, thereby integrating detailed and contextual views into a single workspace display, and allowing the ratio of detail and context to be smoothly adjusted.

Robert Spence and Mark Apperley, in "Database Navigation: An Office Environment for the Professional", *Behavior and Information Technology,* 1982, pp. 43-54, in particular at pp. 48 - 52, disclose a 2D display, called the Bifocal Display that contains a detailed view of information positioned in a horizontal strip combined with two distorted views, where items on either side of the detailed view are distorted horizontally into narrow vertical strips. The combined views make the entire data structure visible to the system user. The Bifocal Display technique makes use of the visual display of graphical representations of data items to facilitate the identification and location of information of interest and permits that information to be pulled into a central "close-up" region for more detailed examination.

Jacques Bertin, in a book about the study of graphics as a sign system entitled *Semiology* of *Graphics* (1983 English translation from the French 1973 second edition), discusses, in Part II of the book, theories for constructing a class of graphs called diagrams, which include "image" and table, or "matrix", files, using graphic information processing techniques so as to effectively display large amounts of related data in a single graphic.

Conventional table image processing applications, especially spreadsheet applications, typically provide roughly uniform amounts of display space for individual cells in the rows and columns. The amount of space for each cell is constrained by factors such as the space needed to adequately represent the data value of à respectively paired source data item and the total space available in the display area or workspace. The table layout, including the size of the cell regions, is often predefined and may not be easily varied by a system user. Roughly uniform cell regions provide few visual clues for quickly locating a particular cell region in the table image. In the case of a large table that occupies most of the display area, the area of each cell region may be necessarily computed to be small, and a system user may find the data representation in one or more cell regions of particular interest difficult to locate, access, read or understand.

A preferred embodyment provides for user control of the sizing of the cell regions of a table image to reflect the system user's level of interest in one or more cell regions. This aspect of the method of the present invention will be referred to herein as the "focus plus context" table image feature. Cell regions that the system user is currently using, by either reading or updating, become larger, and other cells, not currently being used and of current lesser interest, become smaller in response to a user signal invoking the focus plus context feature, without the overall size of the table image necessarily changing

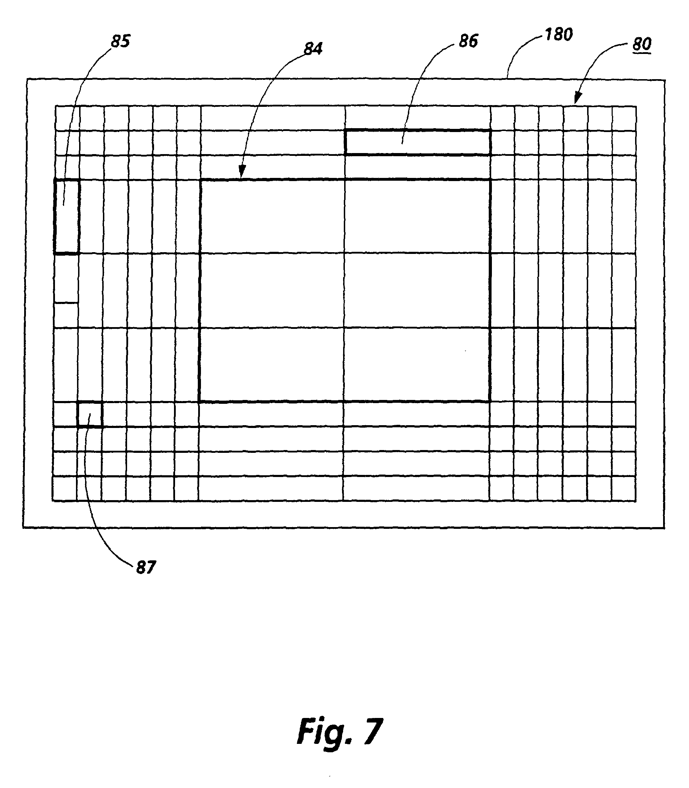

Table image 80 in FIG. 7 illustrates how the cell regions of a table image may be altered according to the focus plus context feature of the method of the present invention. As used herein, the size of table image 80 prior to the operation of the focus plus context feature of the method of the present invention on table image 80 will be referred to as its "natural" size, and is not necessarily shown in FIG. 7. The natural size of the table image may be predetermined by the application program or may be under the control of the system-user. The natural size of table image 80 provides a natural size for each cell region in which the respectively paired data from the underlying data array may be directly represented in a meaningful form. The "output" size of table image 80, shown in FIG. 7 is a predetermined size used by the processing steps of the invention to compute the proper allocation among the different types of cell regions. The output size of table image 80 may be its natural size, the current window size, a system determined size, a user-determined size, or the size of the entire display area. In the illustrated embodiment, the output size of the table is governed by a current window size, shown as the size of display area 180.

Four types of cell regions are created, each of which has been marked by darker boundaries in FIG. 7 for ease of recognition only. Area 84 is the "focal region", having at least one cell region, called a "focal cell region" included therein; the size of each of the six focal cell regions in illustrated focal region 84 is computed using a number of factors, described in more detail below, including the natural size of each focal cell region and the number of cell regions to be included in the focal region. Region 87 is called a "context cell region" or "context region"; a context region is a cell region that is in a row and column that is not the same row or column of a cell region in the focal region. A context cell region has the smallest cell size of the four types of cell regions created by the focus plus context method. Region 85 is a "row-focal region", having a cell width dimension along the x axis equal to the cell width of a context region located in the same column, and having a cell height dimension along the y axis equal to the cell height dimension of the focal cell region located in the same row. Region 86 is a "column-focal region", having a cell height dimension along the y axis equal to the cell height of a context region located in the same row, and having a cell width dimension along the x axis equal to the cell width dimension of the focal cell region located in the same column.

Cell regions selected to be in focal region 84 are cell regions that have a higher "level of interest" than other cell regions. The level of interest in cell regions is represented in each dimension by a "degree of interest" ("DOI") function that indicates the interest level of each cell region in that dimension. The DOI function can be implemented in any manner suitable for taking as an argument a cell number in a given dimension and returning the interest level of that cell. A simple implementation of the DOI function is an array that is as long as the number of cells in that dimension. In its initial state, each entry has an initial value of zero, indicating that each cell has the same interest level, and therefore the amount of space, in table image 80 in that dimension. When a focal region is selected, then the array representing the DOI function for each dimension is changed to reflect the interest level for that cell. For example, the cells that are selected as part of the focal region are updated to have a value of one (1).

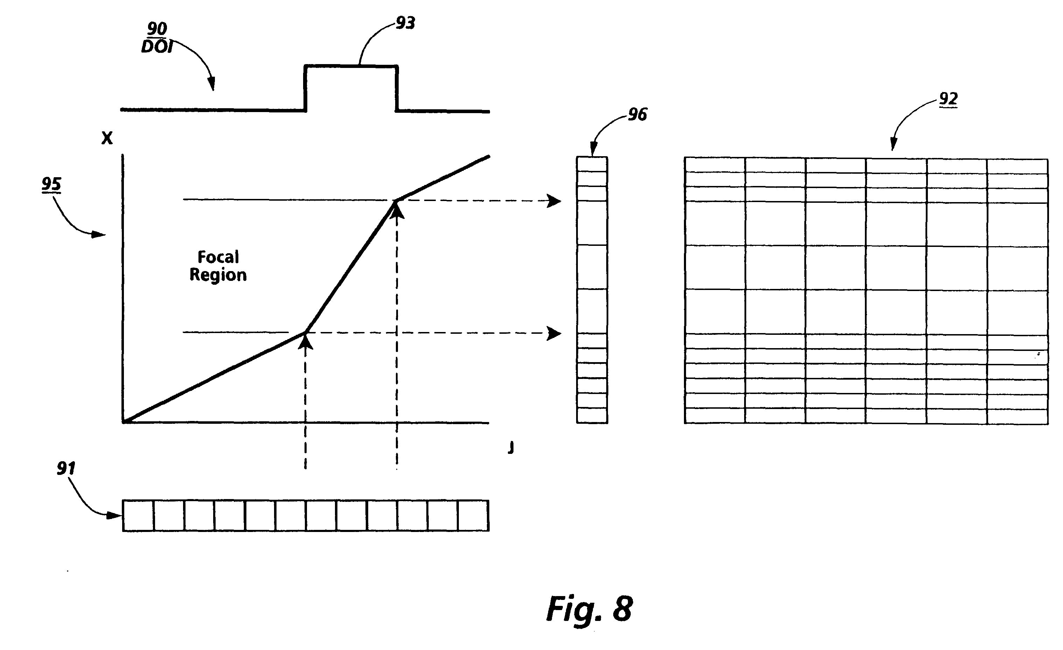

There is a DOI function for each dimension of an n-dimensional table, and each function is independent of all of the others. FIG. 8 schematically represents degree of interest function 90 for one dimension (the row dimension) of table image 92. DOI function 90 is aligned with the x axis of graph 95. Table image 92 has twelve rows, represented by region array 91, also aligned with DOI function 90 the x axis of graph 95. Pulse 93 of DOI function 90 indicates the level of interest for a focal cell region in the row dimension of table image 92, and spans three rows. Graph 95 represents a "transfer function" for allocating the proper size for each row focal cell region, and for determining the size of the remaining cell regions in the row. The results of the allocation can be seen in the single column 96, and table image 92 shows the results of the propagation of the allocated cell region sizes in column 96 across all columns.

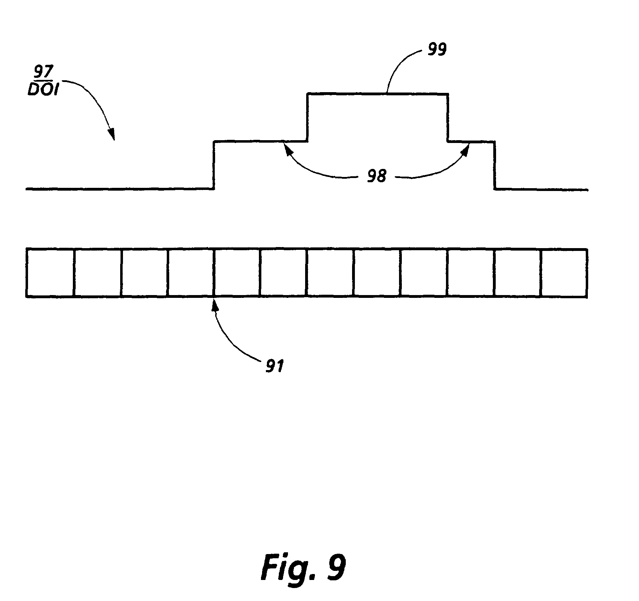

Using a degree of interest function to represent a level of interest in a cell region in one dimension permits introducing multiple levels of interest in each dimension. FIG. 9 shows three-level DOI function 97 having interest levels 98 and 99 to be applied to the same 12-row table image represented by region array 91. For any level DOI functions, the "level" corresponds to the number of different-sized "interest" cell regions that will be produced, plus one for the context, or non-focal, region. Thus, in the case of DOI function 90 in FIG. 8, there are a total of two cell sizes in one dimension: focal and context. In three-level DOI function 97, there will be three cell sizes in the dimension to which the DOI function applies: the largest focal cells representing the highest level of interest, intermediate-sized focal cells for the second level of interest, and the smallest context or non-focal, cells for the third level of interest.

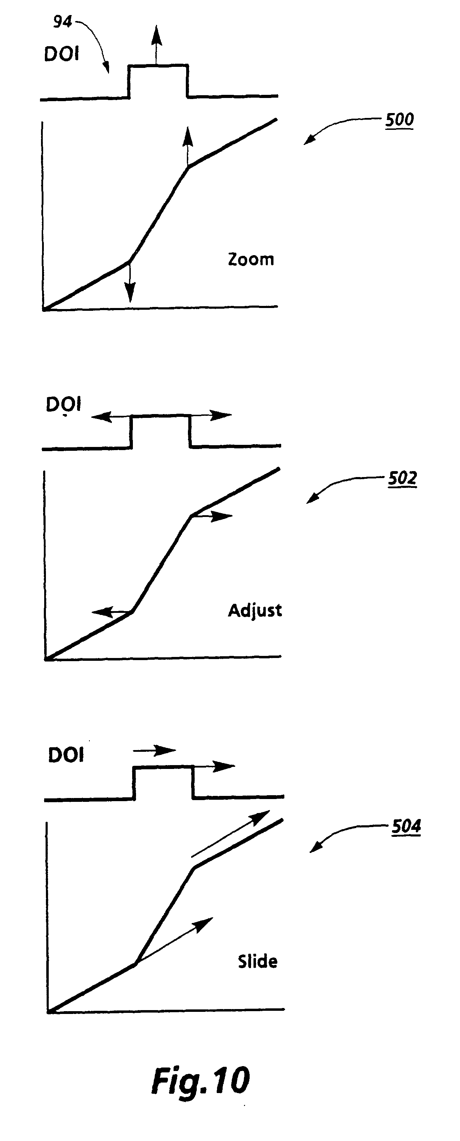

Use of a degree of interest function also allows for convenient manipulation of focal cells once produced in a table image. Three forms of manipulation are supported in the illustrated embodiment, and they are each schematically illustrated in FIG. 10. DOI function 94 is a square pulsed, single level DOI function similar to DOI function 90 in FIG. 8. A "zoom" focal region manipulation, represented by chart 500, changes the amount of space allocated to the focal region without changing the number of cell contained in the focal region, thus increasing the width and height of the focal region. An "adjust" focal region manipulation, represented by chart 502, changes the amount of contents viewed within the focal region without changing the size, or amount of space allocated to, the focal region, thus "pulling" more cells into the focal region. A "slide" focal region manipulation, represented by chart 504, changes the position of the focal region within the table image while keeping the size, or amount of space allocated to, the focal region the same, thus giving the perception of "sliding" the focal region around the table image in the manner analogous to an optical magnifying lens. In addition, a coordinated adjust-zoom operator has also been implemented. It provides for increasing or decreasing the number of cells in the focal region without affecting their individual size, meaning that the total focal region expands or contracts sufficiently to fit a new number of focal cell regions each having the same size as before the operator was invoked.

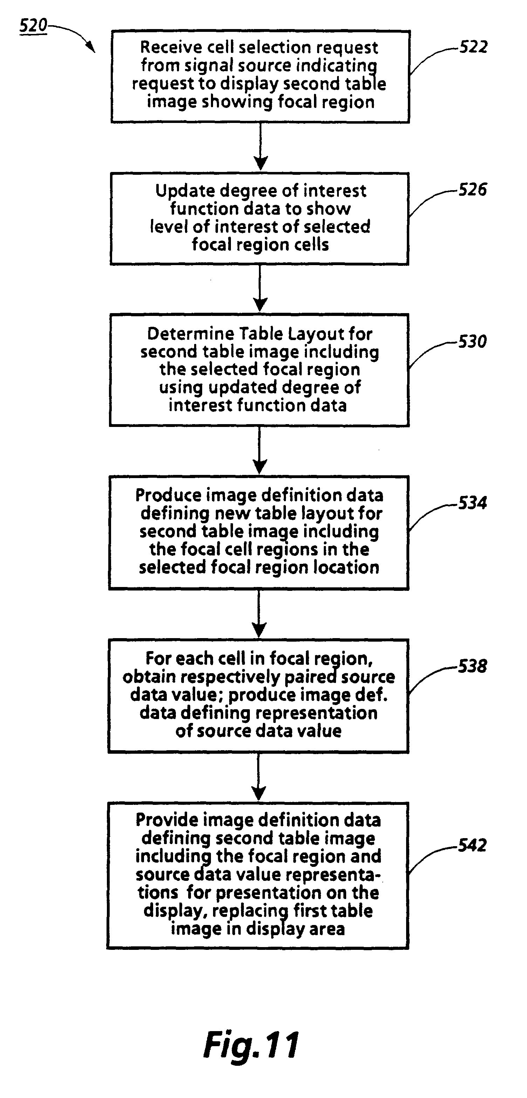

FIG. 11 is a flowchart illustrating the general steps of the focus plus context method 520. The implementation illustrated in FIG. 11 assumes that a first table image is displayed in the display area, and that an input signal interacts with the first table image for selecting at least one cell region to become the focal region. However, the focus plus context method of the present invention may operate independent of a prior-displayed table image. In addition to having information about the available display space for the output table image, the identification of a single cell region that is to become the focal region is sufficient input for operation of the method, and this may be accomplished without actual display of a first table image. Moreover, the computations performed with respect to laying out the output table produced by the method of the present invention may be independent of a table layout for a currently displayed table, especially when a predetermined "natural" focal cell region size and output table size are assumed by the method.

A signal is received from a signal source in box 522 indicating a request to display a second table image having a focal region selected by indicating at least one cell region of a first table image displayed in the display area. In response to the image display request, the DOI function data for each dimension is updated, in box 526, to show the at least one selected cell region as having a first level of interest. Then, the four cell region sizes for the new table layout of the second table image are determined using the updated degree of interest function and natural cell size data for each dimension of the table, in box 530. In box 534, the image definition data defining the new table layout including the selected focal region is produced for the second table image. Box 538 includes traversing the underlying nD data array and rendering the source data values in the focal cell regions of the second table image. In box 542, the image definition data defining the second table image is provided to the display.

Which additional source data values are rendered is an implementational choice. Depending on the nature of the underlying data, non-focal cells may now be too small to adequately hold source data values rendered as character display features, and so they may be omitted on the assumption that the selection of the focal region indicated the only cells of interest. Or the character display features of the source data values may be revised in order to fit into the respective destination cell region size. Or, as noted below focus, plus context method 520 may be combined with any of the graphical representation methods 200, 202, or 204 in such a way as to render each source data value as a graphical representation in the non-focal cell regions.

The component steps of box 530 for determining the cell sizes in one dimension according to the DOI function and the "natural" measurement of the cell in the given dimension are as follows: the cells proportionally across the dimension. First, how many cells there are at the focal level of interest is determined, and each of those cells is allocated its natural size. Then the total space required by the focal cell regions is subtracted from the total amount of space in the given dimension. The space remaining in the dimension is divided equally among the rest of the cells in that dimension.

Implementing a DOI function includes the following general steps: first, the total space requirement of all focus cells is determined and subtrated from the total space available. Then the remainder is derived by the number of context cells and truncated to a whole number. While iterating through the cells in order, the focus cell or cells are given the requested space, and then the context space is given the calculated amount for the context cells.

Visual differentiation between the focal, context, and the row- and column-focal regions may be further enhanced in the display area by using different grey level values as background color in the appropriate cell regions on display devices that support this feature. For example, focal regions can be shown with a white background, context areas may have a medium to dark grey background, and the row- and column-focal regions may have a light to medium grey background. Alternatively, different saturation, chroma or lightness variations of a single hue color, or of harmonious hue colors may also be used as background in the appropriate cell regions to provide such visual differentiation, although the use of color should be selected carefully if the focus plus context method is combined with the graphical representation method, as described below.

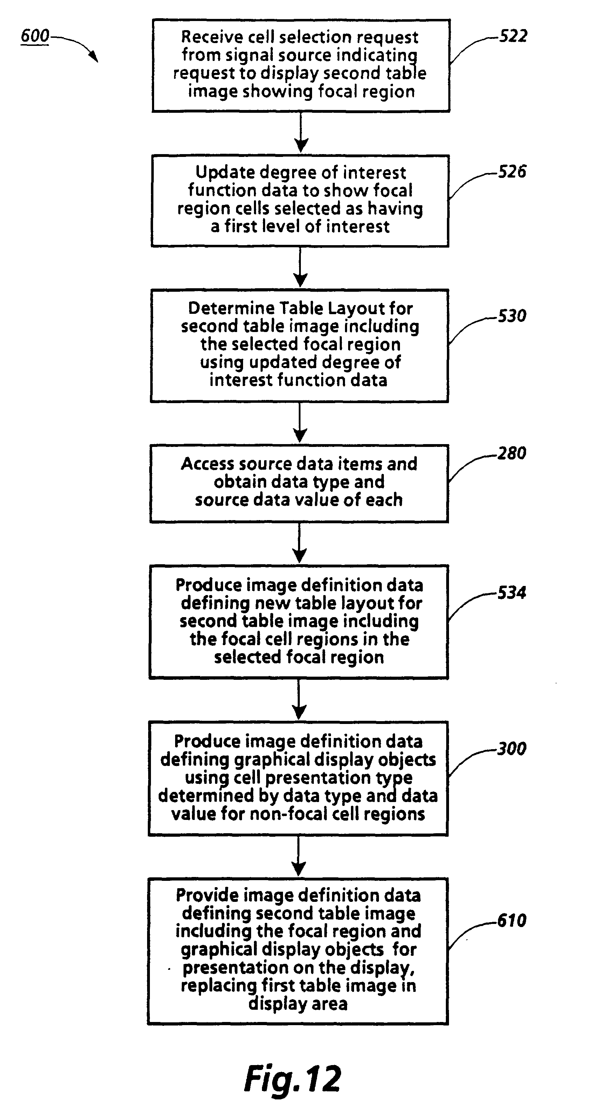

The advantages of producing table image 10 of FIG. 1 presenting graphical representations of the source data items in nD data array 810 may be further enhanced by integrating method 520 of FIG. 11 with any of methods 200, 202, and 204 of FIGS. 4, 5, and 6, respectively. In combination, the resulting method, shown in the flowchart of FIG. 12, provides a novel table image presentation technique having a wide variety of applications and contexts.

The skilled reader will appreciate that, when both focus plus context and graphical representation features are combined, processing performance efficiencies can be obtained by caching a table image that is entirely in context form showing only graphical representations. For processes such as changing focal regions and where only the display of a single column is affected, such as some of those available through the user interface described below, a cached table image in context form significantly reduces the amount of computation and graphic formatting necessary to repaint the table image in the display area. Such user controlled processes include hiding and revealing columns, and changing cell presentation type parameters.

The application of the method of the present invention combining the focus plus context technique with the use of graphical representations of data is particularly useful for large table images representing large nD data array structures, as is described in more detail below. The application of the combined method may also be useful for complex data structures, such as data structure 860 illustrated in FIG. 3, regardless of the size of the data structure, when the direct symbolic representation of the underlying data occupies more space than a single display area. It has already been noted that the graphical representation of complex data structures provides a space-efficient utilization of the display area. The system user's ability to control the presentation of focal regions where the complex underlying data can be directly represented only as needed, according to the user's interest level, further enhances the utility of this embodyment.

This embodyment is particularly suited for producing table images representing large bodies of data. In conventional table-processing applications such as spreadsheet applications, the data in a very large data array cannot be completely represented in one image, and various techniques are provided to the system user to gain access to data in portions of the spreadsheet or table image that are not currently visible in the display area. Techniques such as scrolling through a table image to bring new cells into the display area or paging through multiple images require excessive amounts of time, and may result in the loss of column and row identifiers that provide navigational clues for efficiently locating a desired item of data.

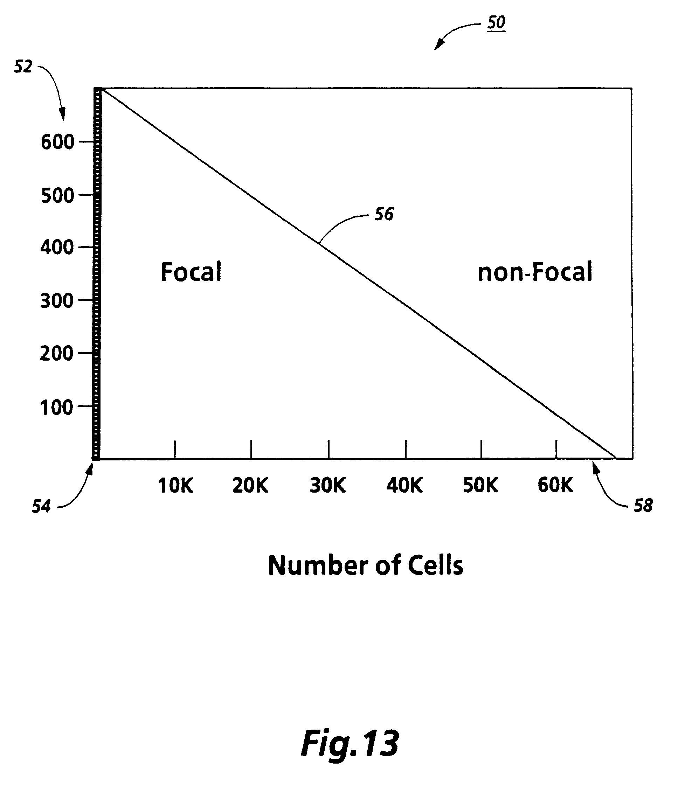

In a simple computation it can be shown that, in a spreadsheet having individual cells of 100 pixels by 15 pixels, a maximum of 660 cells can be displayed on a 19-inch display. Graph 50 in FIG. 13 shows the advance in the size of a table image as more cells become context cells and use an indirect graphical method for representing the underlying source data. The y axis 52 shows the 660 cells computed for a typical 19-inch display. Grey strip 54 shows the displayable regions of typical spreadsheet where all cells are focal, containing a direct representation of the underlying data. Line 56 shows the progressive advancement in the number of displayable cells as more cells are converted from focal to non-focal. It can be seen from graph 50 that the method of the present invention can show about 68,400 cells in a single table image, or over two orders of magnitude more cells than in a conventional spreadsheet table image.

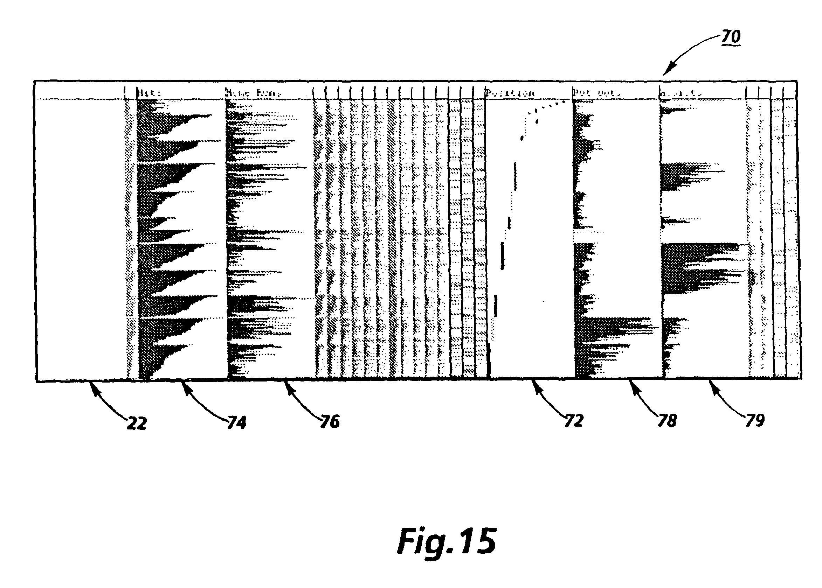

FIGS. 14 and 15 show table images 60 and 70, respectively. Each table contains 323 rows by 23 columns, for a total of 7429 cells. This is 11 times, or an order of magnitude, more than the estimated maximum of 660 cells for a conventional table, as shown in graph 50 of FIG. 13. The data used and presented in table images 60 and 70 are performance and classification baseball statistics for all U.S. major league baseball players from 1986 and 1987. FIG. 14 shows table image 60 in display area 180 with several features of the user interface of the illustrated embodiment. Table Image 60 shows several focal regions such as focal region 62. To assist in understanding the data presented in focal region 62, column identifier "Avg." and row identifiers 23 showing player names have entries, while column identifiers and row identifiers are omitted in non-focal and semi-focal regions. Two cell regions 26 and 27 are marked in FIG. 14 as examples of the direct symbolic representation of data in the cell region 27 of the focal region and the indirect, graphical representation of data in the cell region 26 of the context area. Table image 60 also shows column 64 as a sorted column, sorted in descending order by "career average".

Table image 70 in FIG. 15 illustrates some of the exploratory data analysis techniques that may be accomplished. The quantitative performance of the baseball players is explored by sorting column 74 ("Hits") and then col. 72 .("Position"). This shows the distribution of hits within each field position. By understanding and decoding the graphical representation used for each of the field positions in column 72, the relationship between field position and hits is immediately apparent. In addition, other relationships in the data between field position and other components (variables) also emerge, as can be seen by the aggregation of high numbers of "put outs" and "assists" in columns 78 and 79, respectively.

Upon visual inspection of table images 60 and 70 in FIGS. 14 and 15, the human perceptual and cognitive abilities of a system user permit, or may even require, the aggregation of individual graphical display objects in individual cells into global patterns and shapes, typically but not necessarily by columns. If cell presentation types have been carefully designed and selected for the data types of the underlying data, the patterns and shapes will "emerge" from the display of the individual graphical display objects as the system user manipulates the arrangement of the rows or columns according to the facilities provided by the features of the user interface. This provides the system user with the ability to detect, understand, and appreciate information about the underlying data that in fact is likely not to be directly contained in the data.

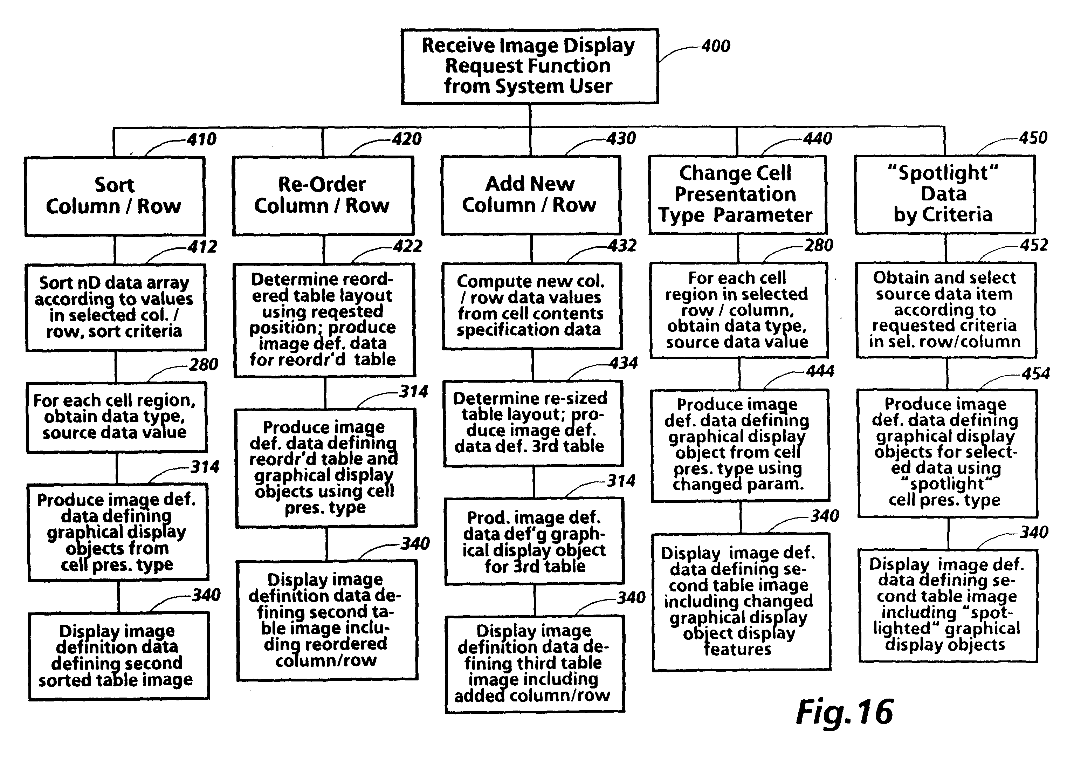

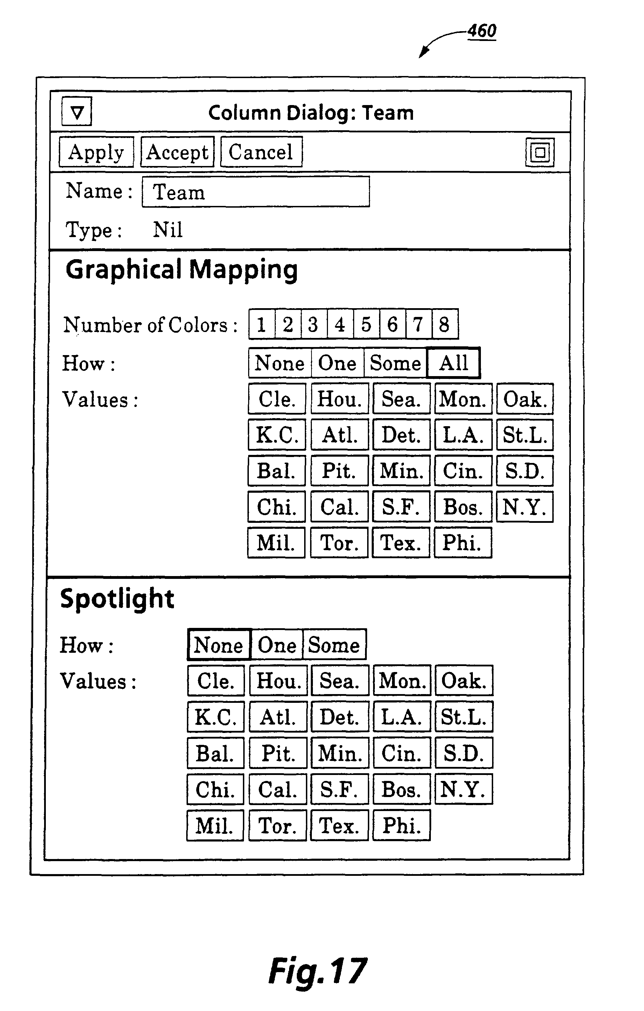

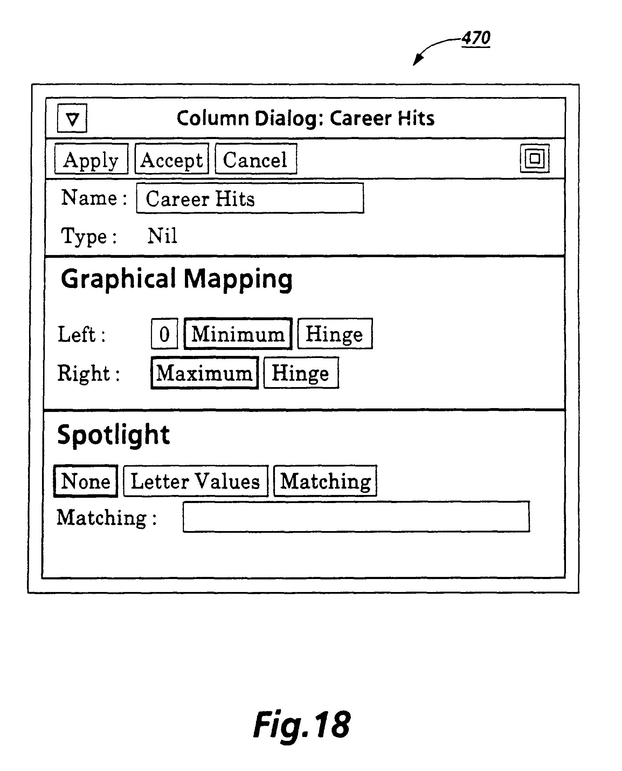

The illustrated embodiment has been implemented with a multi-functional user interface to enable the system user to manipulate components of table image 10 so as to reveal patterns in the data and to control the selection and location of focal regions within the table image. The general processing steps for five operations are shown in Fig. 16, and exemplary pop-up dialogue boxes are shown in Figs 17 and 18. For conciseness, a description of the user interface has been omitted from the present disclosure: the interface is described in detail (in section B.4 thereof and referring to Table 7) in USSN 08/123,174.

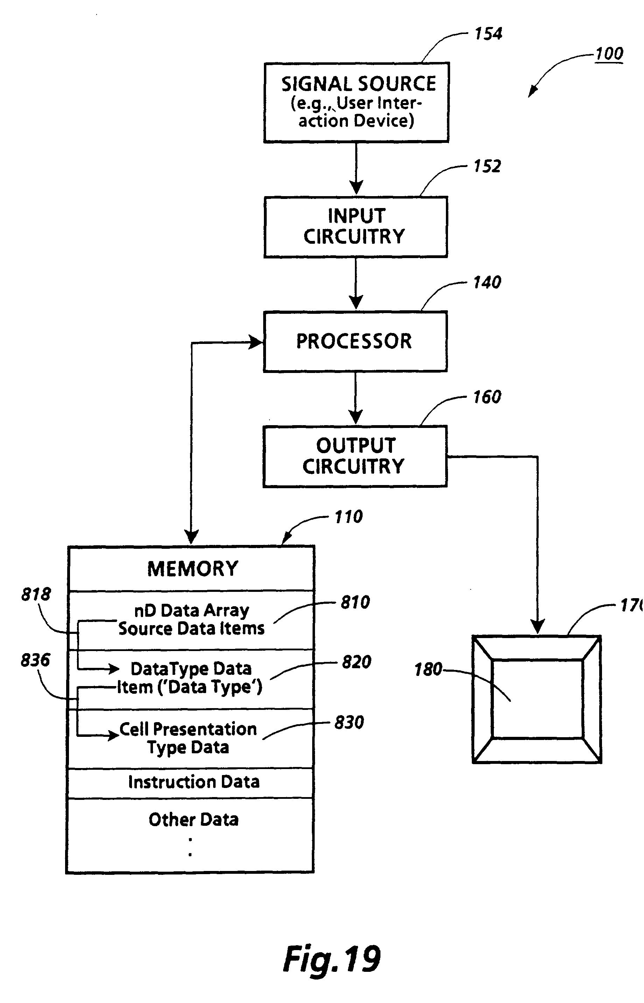

The method of the present invention operates a variety of processor-controlled systems, each of which has the common components, characteristics and configuration of system 19 illustrated in Fig. 19. System 100 includes input circuitry 152 for receiving input "request" signals from one or more signal sources 154 indicating image display requsets.

Signal source 154 may include any signal producing source that produces signals of the type needed by an embodyment. Such sources include a variety of input devices controllable by a human user that produce signals generated by the user, and may also include other devices connected to system 100 for providing such signals, including devices connected by wired or wireless communications facilities, such as through remote or local communications networks and infrared and radio connections. Signal source 154 may also include operations performed by system 100, such as the operating system of a digital computer, or other applications performed by the digital computer.

Signal source 154, connected to input circuitry 152, may include, for example, a keyboard or a pointing device, used by the system user to indicate actions. Suitable pointing devices include, but are not limited to, a mouse, a stylus or pen, and a trackball. The pointing device has circuitry (not shown) for controlling the interaction between the system user and display features and objects presented on display device 170. Processor 140 is connected for receiving the signals from input circuitry 152.

With continued reference to FIG. 19, system 100 also includes memory 110 for storing data. Processor 140 is connected for accessing the data stored in memory 110, and for providing data for storing in memory 110. Memory 110 stores instruction data indicating instructions the processor executes, including the instruction data indicating the instructions for operating system 100 according to the method of the present invention.

Processor 140 is also connected for providing data defining table image 10 to output circuitry 160 for presentation on display device 170 in display area 180. Processor 140 is further connected for providing data defining images, produced according to the method of the present invention, to output circuitry 160 for presentation on display 170 in display area 180. In the description of the illustrated embodiment, the display area corresponds to the visible part of the display screen, and displays table image 10 having graphical display objects (e.g., as in FIG. 1) and table image 80 having a focal region plus context areas (e.g., as in FIGS. 7, 14, and 15). However, an embodyment could also provide for displaying the table images produced in a virtual screen or presentation space for a window, or to the area of a buffer for printing or facsimile transmission, or the like.

The actual manner in which the physical hardware components of system 100 are connected may vary, and may include hardwired physical connections between some or all of the components, connections over wired or wireless communications facilities, such as through remote or local communications networks and infrared and radio connections. Additional features of particular embodiments of the invention, which are known in the art, are disclosed in USSN 08/123,174, a copy of which was filed with the present application.

One embodiment of the method of the present invention has been implemented in the Common Lisp programming language using the Common Lisp Interface Manager (a user interface programming interface), both of which are commercial software products available from Franz, Inc. of Berkeley, California, Lucid, Inc. of Menlo Park, California, and Apple Computer of Cupertino, California. The method has been demonstrated on a Sun Microsystems SparcStation computer running the Unix operating system and the XWindows environment.

The system of the present invention includes a processor that is operated according to any of the methods previously described, and its components, characteristics, and configuration have been described above with respect to system 100 of FIG. 19.

FIG. 20 illustrates still another system configuration. Components of system 102 in FIG. 20 that are functionally similar to system components in system 100 have the same reference numerals, and will not be described further here. Note that when an embodyment of the present invention is implemented in a system in which the user input device is a pointing or positioning device that eliminates the user's dependence on a keyboard device for the entry of signals, the system of the present invention may be a pen- (stylus-) based computing system, or a small, notebook- or palm-sized processor-controlled system having a small display area for which a keyboard component is not suitable or not included.

System 102 includes storage medium access device 115. Storage medium access device 115 provides data from a data storage medium to processor 140. FIG. 20 also shows software product 120, an article of manufacture that can be used in a system that includes components like those shown in FIG. 20. Software product 120 includes data storage medium 122 that can be accessed by storage medium access device 115. Data storage medium 122 could, for example, be a magnetic medium such as a set of one or more floppy disks or PCMCIA memory storage, an optical medium such as a set of one or more CD-ROMs, or any other appropriate medium for storing data. Data storage medium 122 stores data that storage medium access device 115 can provide to processor 140.

In addition to data storage medium 122, software product 120 includes data stored on storage medium 122. The stored data include data indicating instructions 124 and 126, which can be executed to produce and display a table image similar in format to table images 60 (FIG. 14) and 70 (FIG. 15) in display area 180, as, for example, by the instructions represented in the boxes of FIG. 12.

Each of the aspects of the method of the present invention may be applied in the domain of three dimensions (3D). A 3D cube of cell regions may be generated, whereby each pair of dimensions is capable of visualization and manipulation according to the techniques described above. 3D motion control techniques can be used to navigate around the 3D table, or, alternatively, 3D object manipulation techniques can be used to move the 3D table, in order to view a different pair of dimensions.

In conclusion, the method of the present invention provides a time- and space-efficient mechanism for visualizing and analyzing large bodies of data suitable for representation in a table format.

## Claims

1. A method of operating a system including a display having a display area (180) for presenting images, a processor connected for providing images to the display and connected to a memory for accessing the data stored in said memory; said method comprising the following steps carried out by said processor:
obtaining a plurality of source data items (816, 817) from a memory, said memory comprising an n-dimensional data array (810) storing source data items, each of said source data items having a source data value;
producing image definition data defining a table image (10), for display in said display area, said table image including cells organized in rows and columns, each cell comprising a graphical display object (30, 32, 36, 40, 42) for representing a data source item allocated to the respective cell;
said method being **characterized by** the steps of:
for each obtained source data item, determining a data type from a data type array (820), wherein said data type array being stored in said memory and wherein source data items allocated to cells of the same column have the same data type,
for each obtained source data item, determining a cell presentation type (830) based on the related data type,
for each obtained source data item, generating a corresponding graphical display object based on the related cell presentation type and based on the related source data value, said generated display object having size dimensions suitable for presentation in said cell.

2. The method of claim 1 further including, prior to the step of producing the image definition data defining the graphical display object (30, 32, 36, 40, 42), obtaining the source data value of the source data item.

3. The method of claim 1 or 2 wherein:
a data type related to source data items allocated to cells of a column is a quantity data type;
the source data value of these source data items indicates quantity information;
the step of generating the graphical objects (30, 32, 36, 40, 42) includes determining
a line segment for each graphical object related to these source data items according to the related cell presentation type; and/or
the length of the line segment for each graphical display object related to the source data items according to the source data value of the related source data item;
the length of the line segment being no greater than a width dimension of the cell and determined by the quantity information of the related source data item (816, 817).

4. The method of claim 1 or 2 wherein:
a data type related to source data items allocated to cells of a column is a category type indicating that the source data value of the related source data item (816, 817) is one of at least two categories of information;
the source data value of these source data items (816, 817) indicates category information; and
the step of generating the graphical objects (30, 32, 36, 40, 42) includes determining a visible display object boundary feature having an object width dimension equal to or smaller than a computed width dimension obtained by dividing a width of the cell region (26) by a quantity of information categories, the visible display object boundary feature being determined for each graphical object related to these source data items according to the related cell presentation type.

5. The method of claim 4 wherein the step of generating the graphical objects (30, 32, 36, 40, 42) includes determining an x-coordinate position in the cell determined by the category information, or a fill colour feature included within a visible display object boundary feature and determined by the category information of the related source data item (816, 817).

6. The method of any of claims 1 to 5 wherein
the source data value of some of the plurality of source data items (816, 817) is a composite object data structure; and
the cell presentation type (830) defines a mapping from the composite object data structure to the graphical display object (30, 32, 36, 40, 42).

7. A system including
a display having a display area (180) for displaying image definition data defining a table image; the table image including cells organized in rows and columns, each cell comprising a graphical display object for representing a source data item allocated to the respective cell;
a processor connected for providing the image definition data to the display and processing instructions; and
a memory coupled for providing data stored in the memory to the processor; the data comprising an n-dimensional data array (810) storing source data items (816, 817), each having a source data value; the processor obtaining a plurality of source data items from the n-dimensional data array (810);
**characterized in that**
the processor determining a data type for each obtained source data item from a data type array (820); said data type array being stored in said memory; source data items allocated to cells of the same column having the same data type;
the processor determining a cell presentation type (830) for each obtained source data item based on the related data type;
the processor generating the corresponding graphical display object for each obtained source data item based on the related cell presentation type and the related source data value; the graphical display object having size dimensions suitable for presentation in the cell.

8. The system of claim 7 **characterized in that** the processor obtains the source data value of the source data item before producing the image definition data; and wherein the step of producing the image definition data defining the graphical display object (30, 32, 36, 40, 42) includes determining a first display feature of each graphical display object according to the corresponding cell presentation type and a second display feature of each graphical display object according to the source data value of the source data item; each graphical display object (30, 32, 36, 40, 42) presented in the cell region graphically representing both the corresponding cell presentation type and the corresponding source data value of the source data item (816, 817).

9. The system of claims 7 or 8 **characterized in that**
the data type indicated by some of the obtained source data items (816, 817) is a quantity data type;
the source data value of the source data item indicates quantity information;
the first display feature of the graphical display object (30, 32, 36, 40, 42) produced from the cell presentation type is a line segment; and/or
the second display feature of the graphical display object (30, 32, 36, 40, 42) is the length of the line segment; the length of the line segment being no greater than a width dimension of the cell region and determined by the quantity information of the source data item (816, 817).

10. The system of claims 7 or 8, **characterized in that**
the data type indicated by said some of the obtained source data items (816, 817) is a category type indicating that the source data value of the source data item (816, 817) is one of at least two categories of information;
the source data value of the source data item (816, 817) indicates category information; and
the first display feature of the graphical display object is determined from the cell presentation type is a visible display object boundary feature having an object with dimension equal to or smaller than a computed width dimension obtained by dividing a width of the cell region (26) by a quantity of information categories.

11. The system of claim 10 **characterized in that** the second display feature of the graphical display object is either an x-coordinate position in the cell region (26) determined by the category information of the source data item (816, 817) or a fill colour feature included within the visible display object boundary feature and determined by the category information of the source data item (816, 817).

12. The system of any of claims 7 to 11 **characterized in that** the source data value of some of the obtained source data items (816, 817) is a composite object data structure; and
the cell presentation type (830) defines a mapping from the composite object data structure to the graphical display object (30, 32, 36, 40, 42).

## Patentansprüche

1. Verfahren zum Betreiben eines Systems, das eine Anzeige, die einen Anzeige-Bereich (180) zum Präsentieren von Bildern, einen Prozessor, der zum Liefern von Bildern zu der Anzeige verbunden ist und mit einem Speicher zum Zugreifen auf die Daten, gespeichert in dem Speicher, verbunden ist, umfaßt, wobei das Verfahren die folgenden Schritte aufweist, die durch den Prozessor ausgeführt werden:
Erhalten einer Mehrzahl von Quellen-Daten-Elementen (816, 817) von einem Speicher, wobei der Speicher ein n-dimensionales Daten-Feld (810) aufweist, das Quellen-Daten-Elemente speichert, wobei jedes der Quellen-Daten-Elemente einen Quellen-Daten-Wert besitzt;
Erzeugen von Bild-Definitions-Daten, die ein Tabellen-Bild (10) definieren, zum Anzeigen in dem Anzeige-Bereich, wobei das Tabellen-Bild Zellen umfaßt, die in Reihen und Spalten organisiert sind, wobei jede Zelle ein graphisches Anzeige-Objekt (30, 32, 36, 40, 42) zum Darstellen eines Daten-Quellen-Elements, zugeordnet zu der jeweiligen Zelle, aufweist;
wobei das Verfahren **gekennzeichnet ist durch** die Schritte:
für jedes erhaltene Quellen-Daten-Element, Bestimmen eines Daten-Typs von einem Daten-Typ-Feld (820), wobei das Daten-Typ-Feld in dem Speicher gespeichert ist und wobei die Quellen-Daten-Elemente, zugeordnet zu Zellen derselben Spalte, denselben Daten-Typ haben,
für jedes erhaltene Quellen-Daten-Element, Bestimmen eines Zellen-Präsentations-Typs (830) basierend auf dem in Bezug stehenden Daten-Typ,
für jedes erhaltene Quellen-Daten-Element, Erzeugen eines entsprechenden, graphischen Anzeige-Objekts basierend auf dem in Bezug stehenden Zellen-Präsentations-Typ und basierend auf dem in Bezug stehenden Quellen-Daten-Wert, wobei das erzeugte Anzeige-Objekt Größen-Dimensionen hat, die zur Präsentation in der Zelle geeignet sind.

2. Verfahren nach Anspruch 1, das weiterhin, vor dem Schritt eines Erzeugens der Bild-Definitions-Daten, die das graphische Anzeige-Objekt (30, 32, 36, 40, 42) definieren, Erhalten des Quellen-Daten-Werts des Quellen-Daten-Elements umfaßt.

3. Verfahren nach Anspruch 1 oder 2, wobei:
ein Daten-Typ, der zu Quellen-Daten-Elementen in Bezug gesetzt ist, zugeordnet zu Zellen einer Spalte, ein Mengen-Daten-Typ ist;
der Quellen-Daten-Wert dieser Quellen-Daten-Elemente Mengen-Informationen anzeigt;
wobei der Schritt eines Erzeugens der graphischen Objekte (30, 32, 36, 40, 42) umfaßt:
Bestimmen eines Linien-Segments für jedes graphische Objekt, das zu diesen Quellen-Daten-Elementen in Bezug gesetzt ist, entsprechend dem in Bezug gesetzten Zellen-Präsentations-Typ; und/oder
Bestimmen der Länge des Linien-Segments für jedes graphische Anzeige-Objekt, das zu den Quellen-Daten-Elementen in Bezug gesetzt ist, entsprechend dem Quellen-Daten-Wert des in Bezug gesetzten Quellen-Daten-Elements;
wobei die Länge des Linien-Segments nicht größer als eine Breiten-Dimension der Zelle ist und durch die Mengen-Informationen des in Bezug gesetzten Quellen-Daten-Elements (816, 817) bestimmt ist.

4. Verfahren nach Anspruch 1 oder 2, wobei:
ein Daten-Typ, in Bezug gesetzt zu Quellen-Daten-Elementen, zugeordnet zu Zellen einer Spalte, ein Kategorie-Typ ist, der anzeigt, daß der Quellen-Daten-Wert des in Bezug gesetzten Quellen-Daten-Elements (816, 817) eine von mindestens zwei Kategorien von Informationen ist;
der Quellen-Daten-Wert dieser Quellen-Daten-Elemente (816, 817) Kategorie-Informationen anzeigt; und
der Schritt eines Erzeugens der graphischen Objekte (30, 32, 36, 40, 42) ein Bestimmen eines sichtbaren Anzeige-Objekt-Grenzen-Merkmals umfaßt, das eine Objekt-Breiten-Dimensíon gleich zu oder kleiner als eine berechnete Breiten-Dimension besitzt, die durch Dividieren einer Breite des Zellen-Bereichs (26) durch eine Menge von Informationen-Kategorien erhalten ist, wobei das sichtbare Anzeige-Objekt-Grenzen-Merkmal für jedes graphische Objekt, das zu diesen Quellen-Daten-Elementen in Bezug gesetzt ist, gemäß dem in Bezug gesetzten Zellen-Präsentations-Typ bestimmt wird.

5. Verfahren nach Anspruch 4, wobei der Schritt eines Erzeugens der graphischen Objekte (30, 32, 36, 40, 42) ein Bestimmen einer x-Koordinationen-Position in der Zelle, bestimmt durch die Kategorie-Informationen, oder ein Füll-Farb-Merkmal, umfaßt innerhalb eines sichtbaren Anzeige-Objekt-Grenzen-Merkmals, und bestimmt durch die Kategorie-Informationen des in Bezug gesetzten Quellen-Daten-Elements (816, 817), umfaßt.

6. Verfahren nach einem der Ansprüche 1 bis 5, wobei
der Quellen-Daten-Wert einiger der Mehrzahl der Quellen-Daten-Elemente (816, 817) eine Komposit-Objekt-Daten-Struktur ist; und
der Zellen-Präsentations-Typ (830) eine Auflistung von der Komposit-Objekt-Daten-Struktur zu dem graphischen Anzeige-Objekt (30, 32, 36, 40, 42) definiert.

7. System, das umfaßt:
eine Anzeige, die einen Anzeige-Bereich (180) zum Anzeigen von Bild-Definitions-Daten, die ein Tabellen-Bild definieren, besitzt; wobei das Tabellen-Bild Zellen, organisiert in Reihen und Spalten, umfaßt, wobei jede Zellen ein graphisches Anzeige-Objekt zum Darstellen eines Quellen-Daten-Elements, zugeordnet zu der jeweiligen Zelle, aufweist;
einen Prozessor, der zum Liefern von Bild-Definitions-Daten zu der Anzeige und zum Verarbeiten von Instruktionen verbunden ist; und
einen Speicher, der zum Liefern von Daten, gespeichert in dem Speicher, zu dem Prozessor verbunden ist, wobei die Daten ein n-dimensionales Daten-Feld (810) aufweisen, das Quellen-Daten-Eiemente (816, 817) speichert, wobei jedes einen Quellen-Daten-Wert besitzt; wobei der Prozessor eine Vielzahl von Quellen-Daten-Elementen von dem n-dimensionale Daten-Feld (810) erhält;
**dadurch gekennzeichnet, daß**
der Prozessor einen Daten-Typ für jedes erhaltene Quellen-Daten-Element von einem Daten-Typ-Feld (820) bestimmt; wobei das Daten-Typ-Feld in dem Speicher gespeichert ist; wobei Quellen-Daten-Elemente, zugeordnet zu Zellen derselben Spalte, denselben Daten-Typ haben;
der Prozessor einen Zellen-Präsentations-Typ (830) für jedes erhaltenen Quellen-Daten-Element, basierend auf dem in Bezug gesetzten Daten-Typ, bestimmt;
der Prozessor das entsprechende, graphische Anzeige-Objekt für jedes erhaltene QuelIen-Daten-Element, basierend auf dem in Bezug gesetzten Zellen-Präsentations-Typ und dem in Bezug gesetzten Quellen-Daten-Wert, erzeugt; wobei das graphische Anzeige-Objekt Größen-Dimensionen hat, die zur Präsentation in der Zelle geeignet sind.

8. System nach Anspruch 7, **dadurch gekennzeichnet, daß** der Prozessor den QuelIen-Daten-Wert des Quellen-Daten-Elements vor Erzeugen der Bild-Definitions-Daten erhält; und wobei der Schritt eines Erzeugens der Bild-Definitions-Daten, die das graphische Anzeige-Objekt (30, 32, 36, 40, 42) definieren, ein Bestimmen eines ersten Anzeige-Merkmals jedes graphischen Anzeige-Objekts, entsprechend dem entsprechenden Zellen-Präsentations-Typ, und eines zweiten Anzeige-Merkmals jedes graphischen Anzeige-Objekts, entsprechend dem Quellen-Daten-Wert des Quellen-Daten-Elements, umfaßt;
wobei jedes graphische Anzeige-Objekt (30, 32, 36, 40, 42), präsentiert in dem Zellen-Bereich, graphisch sowohl den entsprechenden Zellen-Präsentations-Typ als auch den entsprechenden Quellen-Daten-Wert des Quellen-Daten-Elements (816, 817) darstellt.

9. System nach Anspruch 7 oder 8, **dadurch gekennzeichnet, daß**
der Daten-Typ, angezeigt durch einige der erhaltenen Quellen-Daten-Elemente (816, 817), ein Mengen-Daten-Typ ist;
der Quellen-Daten-Wert des Quellen-Daten-Elements Mengen-Informationen anzeigt;
das erste Anzeige-Merkmal des graphischen Anzeige-Objekts (30, 32, 36, 40, 42), erzeugt von dem Zellen-Präsentations-Typ, ein Linien-Segment ist; und/oder
das zweite Anzeige-Merkmal des graphischen Anzeige-Objekts (30, 32, 36, 40, 42) die Länge des Linien-Segments ist; wobei die Länge des Linien-Segments nicht größer als eine Breiten-Dimension des Zellen-Bereichs ist und durch die Mengen-Informationen des Quellen-Daten-Elements (816, 817) bestimmt ist.

10. System nach Anspruch 7 oder 8, **dadurch gekennzeichnet, daß**
der Daten-Typ, angezeigt durch einige der erhaltenen Quellen-Daten-Elemente (816, 817), ein Kategorie-Typ ist, der anzeigt, daß der Quellen-Daten-Wert des Quellen-Daten-Elements (816, 817) eine von mindesten zwei Kategorien von Informationen ist;
der Quellen-Daten-Wert des Quellen-Daten-Elements (816, 817) Kategorie-Informationen anzeigt; und
das erste Anzeige-Merkmal des graphischen Anzeige-Objekts, bestimmt von dem Zellen-Präsentations-Typ, ein sichtbares Anzeige-Objekt-Grenzen-Merkmal ist, das ein Objekt besitzt mit einer Dimension gleich zu oder kleiner als eine berechnete Breiten-Dimension, erhalten durch Dividieren einer Breite des Zellen-Bereichs (26) durch eine Menge von Informations-Kategorien.

11. System nach Anspruch 10, **dadurch gekennzeichnet, daß** das zweite Anzeige-Merkmal des graphischen Anzeige-Objekts entweder eine x-Koordinaten-Position in dem Zellen-Bereich (26), bestimmt durch die Kategorie-Informationen des Quellen-Daten-Elements (816, 817), oder ein Füll-Farb-Merkmal, umfaßt innerhalb des sichtbaren Anzeige-Objekt-Grenzen-Merkmals, ist, und durch die Kategorie-Informationen des Quellen-Daten-Elements (816, 817) bestimmt ist.

12. System nach einem der Ansprüche 7 bis 11, **dadurch gekennzeichnet, daß** der Quellen-Daten-Wert einiger der erhaltenen Quellen-Daten-Elemente (816, 817) eine Komposit-Objekt-Daten-Struktur ist; und
der Zellen-Präsentations-Typ (830) eine Auflistung von der Komposit-Objekt-Daten-Struktur zu dem graphischen Anzeige-Objekt (30, 32, 36, 40, 42) definiert.

## Revendications

1. Procédé de mise en oeuvre d'un système comprenant un dispositif d'affichage comportant une zone d'affichage (180) destinée à présenter des images, un processeur relié de façon à fournir des images au dispositif d'affichage et relié à une mémoire en vue d'accéder aux données mémorisées dans ladite mémoire, ledit procédé comprenant les étapes suivantes, exécutées par ledit processeur :
obtenir une pluralité d'éléments de données source (816, 817) à partir d'une mémoire, ladite mémoire comprenant une matrice de données à n dimensions (810) mémorisant des éléments de données source, chacun desdits éléments de données source présentant une valeur de données source,
produire des données de définition d'image définissant une image de tableau (10) en vue de l'affichage dans ladite zone d'affichage, ladite image de tableau comprenant des cellules organisées en rangées et en colonnes, chaque cellule comprenant un objet d'affichage graphique (30, 32, 36, 40, 42) destiné à représenter un élément de données source alloué à la cellule respective,
ledit procédé étant **caractérisé par** les étapes consistant à :
pour chaque élément de données source obtenu, déterminer un type de données à partir d'une matrice de type de données (820), dans lequel ladite matrice de type de données est mémorisée dans ladite mémoire, et dans lequel les éléments de données source alloués à des cellules de la même colonne présentent le même type de données,
pour chaque élément de données source obtenu, déterminer un type de présentation de cellule (830) sur la base du type de données associé,
pour chaque élément de données source obtenu, générer un objet d'affichage graphique correspondant sur la base du type de présentation de cellule associé et sur la base de la valeur de données source associée, ledit objet d'affichage généré présentant des dimensions d'une taille qui convient à une présentation dans ladite cellule.

2. Procédé selon la revendication 1, comprenant en- outre, avant l'étape de production des données de définition d'image définissant l'objet d'affichage graphique (30, 32, 36, 40, 42), l'obtention de la valeur de données source de l'élément de données source.

3. Procédé selon la revendication 1 ou 2, dans lequel :
un type de données associé à des éléments de données source alloués aux cellules d'une colonne est un type de données de quantité,
la valeur de données source de ces éléments de données source indique des informations de quantité,
l'étape de génération des objets graphiques (30, 32, 36, 40, 42) comprend la détermination
d'un segment de ligne pour chaque objet graphique associé à ces éléments de données source 'conformément au type de présentation de cellule associé, et/ou
la longueur du segment de ligne pour chaque objet d'affichage graphique associé aux éléments de données source conformément à la valeur de données source de l'élément de données source associé,
la longueur du segment de ligne n'étant pas supérieure à une dimension de largeur de la cellule et déterminée par les informations de quantité de l'élément de données source associé (816, 817).

4. Procédé selon la revendication 1 ou 2, dans lequel :
un type de données associé aux éléments de données source alloués aux cellules d'une colonne est un type de catégorie indiquant que la valeur de données source de l'élément de données source associé (816, 817) est l'une d'au moins deux catégories d'informations,
la valeur de données source de ces éléments de données source (816, 817) indique des informations de catégorie, et
l'étape de génération des objets graphiques (30, 32, 36, 40, 42) comprend la détermination d'une caractéristique de limite d'objet d'affichage visible présentant une dimension de largeur d'objet inférieure ou égale à une dimension de largeur calculée obtenue en divisant une largeur de la région de cellule (26) par une quantité de catégories d'informations, la caractéristique de limite d'objet d'affichage visible étant déterminée pour- chaque objet graphique associé à ces éléments de données source conformément au type de présentation de cellule associé.

5. Procédé selon la revendication 4, dans lequel l'étape de génération des objets graphiques (30, 32, 36, 40, 42) comprend la détermination d'une position de coordonnées x dans la cellule déterminée par les informations de catégorie, ou bien une caractéristique de couleur de remplissage incluse à l'intérieur d'une caractéristique de limite d'objet d'affichage visible et déterminée par les informations de catégorie de l'élément de données source associé (816, 817).

6. Procédé selon l'une quelconque des revendications 1 à 5, dans lequel
la valeur de données source de certains éléments parmi la pluralité d'éléments de données source (816, 817) est une structure de données d'objet composite, et
le type de présentation de cellule (830) définit un mappage depuis la structure de données d'objet composite sur l'objet d'affichage graphique (30, 32, 36, 40, 42).

7. Système comprenant
un dispositif d'affichage comportant une zone d'affichage (180) destinée à afficher des données de définition d'image définissant une image d'un tableau, l'image du tableau comprenant des cellules organisées en rangées et en colonnes, chaque cellule comprenant un objet d'affichage graphique destiné à représenter un élément de données source alloué à la cellule respective,
un processeur relié de façon à fournir les données de définition d'image au dispositif d'affichage et traiter des instructions, et
une mémoire reliée de façon à fournir des données mémorisées dans la mémoire au processeur, les données comprenant une matrice de données à n dimensions (810) mémorisant des éléments de données source (816, 817), chacun présentant une valeur de données source, le procédé obtenant une pluralité d'éléments de données source à partir de la matrice de données à n dimensions (810),
**caractérisé en ce que**
le processeur détermine un type de données pour chaque élément de données source obtenu à partir d'une matrice de type de données (820), ladite matrice de type de données étant mémorisée dans ladite mémoire, des éléments de données alloués aux cellules de la même colonne présentant le même type de données,
le processeur détermine un type de présentation de cellule (830) pour chaque élément de données source obtenu sur la base du type de données associé,
le processeur génère l'objet d'affichage graphique correspondant pour chaque élément de données source obtenu sur la base du type de présentation de cellule associé et de la valeur de données source associée, l'objet d'affichage graphique présentant des dimensions de taille convenables pour une présentation dans la cellule.

8. Système selon la revendication 7, **caractérisé en ce que** le processeur obtient la valeur de données source de l'élément de données source avant de produire les données de définition d'image, et dans lequel l'étape de production des données de définition d'image définissant l'objet d'affichage graphique (30, 32, 36, 40, 42) comprend la détermination d'une première caractéristique d'affichage de chaque objet d'affichage graphique conformément au type de présentation de cellule correspondant et d'une seconde caractéristique d'affichage de chaque objet d'affichage graphique conformément à la valeur de données source de l'élément de données source, chaque objet d'affichage graphique (30, 32, 36, 40, 42) présenté dans la région de cellule représentant graphiquement à la fois le type de présentation de cellule correspondant et la valeur de données source correspondante de l'élément de données source (816, 817).

9. Système selon les revendications 7 ou 8, **caractérisé en ce que**
le type de données indiqué par certains des éléments de données source obtenus (816, 817) est un type de données de quantité,
la valeur de données source de l'élément de données source indique des informations de quantité,
la première caractéristique d'affichage de -l'objet d'affichage graphique (30, 32, 36, 40, 42) produite à partir du type de présentation de cellule est un segment de ligne, et/ou
la seconde caractéristique d'affichage de l'objet d'affichage graphique (30, 32, 36, 40, 42) est la longueur du segment de ligne, la longueur du segment de ligne n'étant pas supérieure à une dimension de largeur de la région de cellule et déterminée par les informations de quantité de l'élément de données source (816, 817).

10. Système selon la revendication 7 ou 8, caractéristique en ce que
le type de données indiqué par lesdits certains éléments des éléments de données source obtenus (816, 817) est un type de catégorie indiquant que la valeur de données source de l'élément de données source (816, 817) est l'une d'au moins deux catégories d'informations,
la valeur de données source de l'élément de données source (816, 817) indique des informations de catégorie, et
la première caractéristique d'affichage de l'objet d'affichage graphique qui est déterminée à partir du type de présentation de cellule est une caractéristique de limite d'objet d'affichage visible comportant un objet avec une dimension inférieure ou égale à une dimension de largeur calculée obtenue en divisant une largeur de la région de cellule (26) par une quantité de catégories d'informations.

11. Système selon la revendication 10, **caractérisé en ce que** la seconde caractéristique d'affichage de l'objet d'affichage graphique est soit une position de coordonnées x dans la région de cellule (26) déterminée par les informations de catégorie de l'élément de données source (816, 817), soit une caractéristique de couleur de remplissage incluse à l'intérieur de la caractéristique de limite d'objet d'affichage visible et déterminée par les informations de catégorie de l'élément de données source (816, 817).

12. Système selon l'une quelconque des revendications 7 à 11, **caractérisé en ce que** la valeur de données source de certains des éléments de données source obtenus (816, 817) est une structure de données d'objet composite, et
le type de présentation de cellule (830) définit un mappage depuis la structure de données d'objet composite sur l'objet d'affichage graphique (30, 32, 36, 40, 42).
